(19) Europäisches Patentamt
European Patent Office
Office européen des brevets

(11) EP 4 682 198 A1

(12) **EUROPEAN PATENT APPLICATION**
published in accordance with Art. 153(4) EPC

(43) Date of publication:
**21.01.2026 Bulletin 2026/04**

(21) Application number: **24770823.3**

(22) Date of filing: **11.03.2024**

(51) International Patent Classification (IPC):
***C08L 1/08*** (2006.01) ***C08K 3/08*** (2006.01)
***C08K 5/00*** (2006.01) ***C08K 7/18*** (2006.01)
***C09D 5/24*** (2006.01) ***C09D 7/61*** (2018.01)
***C09D 7/63*** (2018.01) ***C09D 7/65*** (2018.01)
***C09D 11/00*** (2014.01) ***C09D 11/037*** (2014.01)
***C09D 101/02*** (2006.01) ***C09D 201/00*** (2006.01)
***H01B 13/00*** (2006.01)

(52) Cooperative Patent Classification (CPC):
**C08K 3/08; C08K 5/00; C08K 7/18; C08L 1/08; C09D 5/24; C09D 7/61; C09D 7/63; C09D 7/65; C09D 11/00; C09D 11/037; C09D 11/08; C09D 11/52; C09D 101/02; C09D 101/08; C09D 201/00;** (Cont.)

(86) International application number:
**PCT/JP2024/009227**

(87) International publication number:
**WO 2024/190717 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023 JP 2023040154**

(71) Applicant: **Kao Corporation**
**Chuo-ku,**
**Tokyo 103-8210 (JP)**

(72) Inventors:
- **NAKAGAWA, Haruka**
**Wakayama-shi, Wakayama 640-8580 (JP)**
- **EYAMA, Takaaki**
**Wakayama-shi, Wakayama 640-8580 (JP)**
- **INAYA, Shuichi**
**Wakayama-shi, Wakayama 640-8580 (JP)**
- **YOSHIKAWA, Yuki**
**Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

# (54) COMPOSITION CONTAINING METAL PARTICLES

(57) The present invention relates to a metal particle-containing composition containing the following component (A), component (B) and component (C), wherein the content of the component (B) based on 100 parts by mass of solid ingredients in the metal particle-containing composition is 70 parts by mass or more, as well as a method of producing a film and a method of producing an electrically conductive member using the metal particle-containing composition:
(A) a modified cellulose fiber having a modifying group at an anionic group of an anion-modified cellulose fiber via a covalent bond;
(B) metal particles; and
(C) an organic compound which is liquid at 25°C under 1 atm.

EP 4 682 198 A1

(52) Cooperative Patent Classification (CPC): (Cont.)
**H01B 13/00**

## Description

### FIELD OF THE INVENTION

The present invention relates to a metal particle-containing composition, and a method for producing a film using the metal particle-containing composition and a method for producing an electrically conductive member.

### BACKGROUND OF THE INVENTION

Recently, techniques that are environmentally friendly have been spotlighted, and materials using cellulose fibers which are biomass abundantly existing in nature have been remarked. For example, Japanese Patent Laid-Open No. 2022-001634 (Patent Publication 1) discloses a thickener composition which contains a specific modified cellulose fiber and a non-aqueous solvent and is used at 50°C or more, for the purpose of providing a thickener composition which is a non-aqueous solvent appropriate for the use at 50°C or more in which the decrease in viscosity is inhibited at a high temperature.

### SUMMARY OF THE INVENTION

The present invention relates to a metal particle-containing composition containing the following component (A), component (B), and component (C);
wherein the content of the component (B) is 70 parts by mass or more, based on 100 parts by mass of solid ingredients in the metal particle-containing composition,

(A) a modified cellulose fiber having a modifying group in an anionic group of an anion-modified cellulose fiber via a covalent bond,
(B) metal particles, and
(C) an organic compound which is liquid at 25°C under 1 atm.

### MODES FOR CARRYING OUT THE INVENTION

Generally, a thickening agent can enhance the viscosity of a composition by increasing its blended amount. However, relatively, the more the blended amount of the thickening agent increases, the smaller the solid content in the composition other than the thickening agent becomes, therefore a characteristic as a composition other than viscosity tends to deteriorate.
Such a problem is more significant in a metal particle-containing composition which contains a lot of metal particles, and a characteristic which is affected by the content of metal particles and a viscosity are in a relation of trade-off, and in a case where the content of metal particles is increased so as to obtain a desired characteristic, the content of thickening agent cannot be increased, therefore it tends to be difficult to obtain a composition having a high viscosity.
On the other hand, although an inhibition of decrease in viscosity at a high temperature is studied in Patent Publication 1, an increase in viscosity in a case where the content of metal particles is increased is not at all studied.
Accordingly, as to a metal particle-containing composition which contains a large amount of metal particles, a further improvement is required in order to realize a high viscosity.
The present invention relates to a metal particle-containing composition which is high in metal particle content and has a high viscosity, and a method for producing a film using the metal particle-containing composition and a method for producing an electrically conductive member.
The inventors of the present invention have found that a metal particle-containing composition which is high in metal particle content and has a high viscosity, and a method for producing a film using the metal particle-containing composition and a method for producing an electrically conductive member can be provided, even if the content of metal particles as a component (B) is equal to or larger than a given value, by containing the given components (A) to (C).
In other words, the present invention relates to the following [1] to [3].

[1] A metal particle-containing composition containing the following component (A), component (B), and component (C);
wherein the content of the component (B) is 70 parts by mass or more, based on 100 parts by mass of solid ingredients in the metal particle-containing composition,

(A) a modified cellulose fiber having a modifying group in an anionic group of an anion-modified cellulose fiber via a covalent bond,

(B) metal particles, and
(C) an organic compound which is liquid at 25°C under 1 atm.

[2] A method for producing a film including applying the metal particle-containing composition described in the above [1] to a base material.
[3] A method for producing an electrically conductive member including applying the metal particle-containing composition described in the above [1] to a substrate.

According to the present invention, a metal particle-containing composition which is high in metal particle content and has a high viscosity, and a method for producing a film using the metal particle-containing composition and a method for producing an electrically conductive member can be provided.

[Metal Particle-Containing Composition]

The metal particle-containing composition of the present invention contains the following component (A), component (B), and component (C), and the content of the component (B) is 70 parts by mass or more, based on 100 parts by mass of solid ingredients in the metal particle-containing composition,

(A) a modified cellulose fiber having a modifying group in an anionic group of an anion-modified cellulose fiber via a covalent bond,
(B) metal particles, and
(C) an organic compound which is liquid at 25°C under 1 atm.

According to the present invention, an effect in which a metal particle-containing composition which is high in metal particle content and has a high viscosity can be provided is exhibited. The reason, although not clear, is thought to be as follows.
The metal particle-containing composition of the present invention can further enhance the dispersibility of a modified cellulose fiber by containing a modified cellulose fiber having a modifying group in an anionic group of anion-modified cellulose fiber via a covalent bond as a component (A), as compared to the case where a modified cellulose fiber having a modifying group via a noncovalent bond. As a result, since the component (A) can exhibit a stable thickening effect with a small content, it is thought that a metal particle-containing composition having a high viscosity can be provided, even if the content of metal particles as a component (B) is high.

< Component (A): a modified cellulose fiber having a modifying group in an anionic group of anion-modified cellulose fiber via a covalent bond >

The metal particle-containing composition of the present invention contains a modified cellulose fiber having a modifying group in an anionic group of anion-modified cellulose fiber via a covalent bond as a component (A) (hereinafter may be referred to as merely as "component (A)"). The component (A) plays a role in enhancing the viscosity of the metal particle-containing composition.

(Anion-modified Cellulose Fiber)

The "anion-modified cellulose fiber" as used herein means a cellulose fiber in which a part of or all hydroxy group of a glucose unit in a cellulose fiber is converted to an anionic group. Here, a glucose unit in the present specification includes a glucose unit in which a hydroxymethyl group is converted to an anionic group.
A favorable example of an anionic group includes, for example, at least one kind selected from a group consisting of carboxyl group, sulfonic acid group, and phosphate (phosphite) group.
The anion-modified cellulose fiber is preferably anion-modified cellulose fiber having a carboxyl group as an anionic group (hereinafter also referred to as "carboxy modified cellulose fiber"), from the viewpoint of availability and effects.
The carboxy modified cellulose fiber is preferably a carboxy modified cellulose fiber in which a hydroxymethyl group ($-CH_2OH$) at C6 of a glucose unit constituting cellulose fibers is selectively converted to a carboxyl group. Here, an ion which is a pair of an anionic group (a counter ion) is preferably a proton.
The content of anionic group in an anion-modified cellulose fiber is preferably 0.1 mmol/g or more, more preferably 0.5 mmol/g or more, and even more preferably 1.0 mmol/g or more, from the viewpoint of introducing a stable modifying group and the viewpoint of enhancing the fibrillation ability of cellulose fibers by introducing a modifying group. In addition, the content of anionic group is preferably 3 mmol/g or less, more preferably 2 mmol/g or less, and even more

preferably 1.8 mmol/g or less, from the viewpoint of manufacturing easiness. Here, "the content of anionic group" means a total amount of anionic group in a glucose constituting cellulose fibers, and concretely it is measured by methods described in Examples mentioned later.

In the present invention, "having a modifying group in an anionic group of anion-modified cellulose fiber via a covalent bond" means that a carbon atom derived from an anionic group or preferably a carboxyl group owned by anion-modified cellulose fiber constitutes a covalent bond, and having a modifying group via the covalent bond.

In the modified cellulose fiber used as component (A) of the present invention, the bonding form of a modifying group and an anionic group is a covalent bond. The covalent bond includes, for example, an amide bond or an ester bond, and an amide bond is preferred.

In such modified cellulose fiber, in a case where the covalent bond is an amide bond or an ester bond, the component (A) is preferably a modified cellulose fiber in which the modifying group is introduced by amidation or esterification of the anionic group of the anion-modified cellulose fiber, and the component (A) is more preferably a modified cellulose fiber in which the modifying group is introduced by amidation of the anionic group of the anion-modified cellulose fiber. More specifically, in a case where the anion-modified cellulose fiber is a carboxy modified cellulose fiber in which a hydroxymethyl group ($-CH_2OH$) at C6 of a glucose unit constituting cellulose fibers is selectively converted to a carboxyl group, it is preferable that a carbon atom at position 6 of a glucose unit constitutes an amide bond or an ester bond and the modified cellulose fiber has a modifying group via the amide bond or the ester bond, and it is more preferable that a carbon atom at position 6 of a glucose unit constitutes an amide bond and the modified cellulose fiber has a modifying group via the amide bond.

(Modifying Group)

The modifying group preferably includes one or more kinds selected from a group consisting of (a) a hydrocarbon group and (b) a polymer group. One or more kinds of these modifying groups may be combined and may bind to an anion-modified cellulose fiber.

(a) Hydrocarbon group

(a) Hydrocarbon group preferably includes one or more kinds selected from a group consisting of monovalent hydrocarbon groups, for example, a linear or branched chain saturated hydrocarbon groups, a linear or branched chain unsaturated hydrocarbon groups, cyclic saturated hydrocarbon groups, aryl groups, aralkyl groups, or heterocyclic aromatic hydrocarbon groups.

The number of carbon in the (a) hydrocarbon group is preferably 1 or more, more preferably 3 or more, even more preferably 8 or more, and even more preferably 10 or more from the viewpoint of increasing the viscosity of the metal particle-containing composition, and preferably 30 or less, more preferably 22 or less, and even more preferably 18 or less from the same viewpoint. The (a) hydrocarbon group may have the substituent mentioned later, and a part of the hydrocarbon group may be substituted to a hydrogen nitride.

The linear or branched chain saturated hydrocarbon group is preferably a linear chain saturated hydrocarbon group from the viewpoint of increasing the viscosity of metal particle-containing composition. The linear or branched chain saturated hydrocarbon group includes, for example, a propyl group, an isopropyl group, a butyl group, a sec-butyl group, a tert-butyl group, an isobutyl group, a pentyl group, tert-pentyl group, an isopentyl group, a hexyl group, an isohexyl group, a heptyl group, an octyl group, 2-ethylhexyl group, a nonyl group, a decyl group, a dodecyl group, a tridecyl group, a tetradecyl group, an octadecyl group, a docosyl group, an octacosanyl group, and the like.

The linear or branched chain unsaturated hydrocarbon groups include, for example, a propenyl group, a butenyl group, an isobutenyl group, an isoprenyl group, a pentenyl group, a hexenyl group, a heptenyl group, an octenyl group, a nonenyl group, a decenyl group, a dodecenyl group, a tridecenyl group, a tetradecenyl group, an octadecenyl group, and the like.

The cyclic saturated hydrocarbon group includes, for example, a cyclopropyl group, a cyclobutyl group, a cyclopentyl group, a cyclohexyl group, a cycloheptyl group, a cyclooctyl group, a cyclononyl group, a cyclodecyl group, a cyclododecyl group, a cyclotridecyl group, a cyclotetradecyl group, a cyclooctadecyl group, and the like.

The aryl group includes, for example, a phenyl group, a naphthyl group, an anthryl group, a phenanthryl group, a biphenyl group, a triphenyl group, a terphenyl group, a group in which these groups are substituted by a substituent mentioned later, and the like.

The aralkyl group includes, for example, a benzyl group, a phenethyl group, a phenylpropyl group, a phenylpentyl group, a phenylhexyl group, a phenylheptyl group, a phenyloctyl group, a group in which these groups are substituted by a

substituent mentioned later, and the like.

The heterocyclic aromatic hydrocarbon group includes, for example, an imidazole group, a methylimidazole group, an ethylimidazole group, a propylimidazole group, 2-phenylimidazole group, a benzimidazole group, a group in which these groups are substituted by a substituent, and the like.

Here, the aforementioned (a) hydrocarbon group is preferably introduced by using amine compound as a compound for introducing a modifying group in an anionic group of anion-modified cellulose fiber via a covalent bond (also referred to as "a compound for modification"). In other words, in a case where the modifying group of the present invention is (a) hydrocarbon group, the modifying group is preferably derived from amine compound containing (a) hydrocarbon group. Such amine compound includes primary amines, secondary amines or the like.

(b) Polymer group

The "polymer group" as used herein means a functional group containing two or more repeating structures of the same structure unit. Here, the "polymer group" as used herein excludes the (a) hydrocarbon group.

The formula weight (molecular weight) of the (b) polymer group is preferably 100 or more, more preferably 500 or more, and even more preferably 1,000 or more from the viewpoint of increasing the viscosity of the metal particle-containing composition, and preferably 1,000,000 or less, more preferably 100,000 or less, even more preferably 10,000 or less, even more preferably 7,000 or less, even more preferably 5,000 or less, even more preferably 4,000 or less, even more preferably 3,500 or less, and even more preferably 2,500 or less from the same viewpoint.

(b) Polymer group is preferably a functional group having a repeating structure connected by a structure having oxygen atom, more preferably a functional group having a repeating structure connected by oxygen atom such as a polyoxyalkylene structure, and a polysiloxane structure, even more preferably having a polyoxyalkylene structure, and even more preferably an alkoxy polyoxyalkylene group from the viewpoint of increasing the viscosity of the metal particle-containing composition.

The polyoxyalkylene structure is, from the viewpoint of increasing the viscosity of the metal particle-containing composition, preferably (co)polymer structure of one or more kinds of oxyalkylene selected from a group consisting of oxyalkylene having number of carbons of 2 or more and 8 or less, more preferably (co)polymer structure of one or more kinds of oxyalkylene selected from a group consisting of oxyalkylene having number of carbons of 2 or more and 4 or less, even more preferably (co)polymer structure of one or more kinds of oxyalkylene selected from a group consisting of ethylene oxide (EO) and propylene oxide (PO), and even more preferably (co)polymer structure in which ethylene oxide and propylene oxide are polymerized randomly or in a state of a block (also referred to as "EO/PO copolymer structure").

In a case where (b) polymer group has EO/PO copolymer structure as a modifying group of the component (A), the modifying group of the component (A) preferably has a structure represented by the following formula (1) as an appropriate structure in a case where a covalent bond is shown as Z.

[Formula 1]

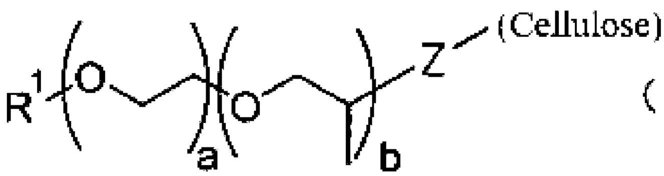

(1)

In the formula (1), $R^1$ represents a hydrogen atom or a hydrocarbon group having carbon atoms of 1 or more and 6 or less. A unit derived from EO and a unit derived from PO are present randomly or in a state of a block, and a is a positive number indicating the average number of moles of EO added and b is a positive number indicating the average number of moles of PO added. In addition, Z in the formula (1) represents a bond of a functional group which can react with an anionic group existing at the terminal of EO/PO copolymer to an anionic group introduced to the anion-modified cellulose fiber, and represents a covalent bond.

$R^1$ is preferably a linear or branched chain alkyl group having carbon atoms of 1 or more and 6 or less and more preferably a methyl group from the viewpoint of increasing the viscosity of the metal particle-containing composition.

From the viewpoint of increasing the viscosity of the metal particle-containing composition, a is preferably 1 or more, more preferably 3 or more, even more preferably 6 or more, even more preferably 11 or more, even more preferably 15 or more, even more preferably 20 or more, even more preferably 25 or more, and even more preferably 30 or more, and from the same viewpoint, preferably 100 or less, more preferably 70 or less, even more preferably 60 or less, even more preferably 50 or less, and even more preferably 40 or less.

From the viewpoint of increasing the viscosity of the metal particle-containing composition, b is preferably 1 or

more, more preferably 3 or more, even more preferably 5 or more, and preferably 50 or less, more preferably 40 or less, even more preferably 30 or less, even more preferably 20 or less, even more preferably 15 or less, and even more preferably 10 or less.

In the formula (1), a+b represents the average addition molar number of the total number of EO and PO. From the viewpoint of increasing the viscosity of the metal particle-containing composition, a+b is preferably 2 or more, more preferably 4 or more, even more preferably 6 or more, even more preferably 8 or more, even more preferably 10 or more, even more preferably 20 or more, and even more preferably 30 or more. In addition, a+b is preferably 150 or less, more preferably 100 or less, even more preferably 70 or less, even more preferably 60 or less, and even more preferably 50 or less from the same viewpoint.

The content (mol%) of the unit derived from PO in EO/PO copolymer structure can be calculated based on the aforementioned a and b, and specifically, the content can be obtained from **b**×100/(**a+b**). The content of the unit derived from PO is, from the viewpoint of increasing the viscosity of the metal particle-containing composition, preferably 1 mol% or more, more preferably 5 mol% or more, even more preferably 7 mol% or more, even more preferably 10 mol% or more, and even more preferably 15 mol% or more. In addition, from the same viewpoint, the content is preferably 100 mol% or less, more preferably 90 mol% or less, even more preferably 85 mol% or less, even more preferably 75 mol% or less, even more preferably 60 mol% or less, even more preferably 50 mol% or less, even more preferably 40 mol% or less, and even more preferably 30 mol% or less.

Z represents a bond of a functional group which can react with an anionic group existing at the terminal of EO/PO copolymer to an anionic group introduced to the anion-modified cellulose fiber, and represents a covalent bond.

Z is preferably a bond one or more kind selected from a group consisting of amide bond and ester bond, and more preferably amide bond from the viewpoint of increasing the viscosity of the metal particle-containing composition.

In a case where Z is amide bond, it is preferably represented by - NH-OC-. Here, in -NH-OC-, -NH is preferably a group derived from amino group existing at one terminal of EO/PO copolymer, and OC- is preferably a group derived from carboxyl group of anion-modified cellulose fiber.

Incidentally, the aforementioned (b) polymer group is preferably introduced using amine compound as a compound for modification. In other words, in a case where the modifying group of the present invention is (b) polymer group, the modifying group is preferably derived from amine compound containing (b) polymer group. Such amine compound includes primary amines, secondary amines or the like.

In a case where the functional group existing at one terminal of EO/PO copolymer structure is amino group, commercially available compounds for modification include Jeffamine M series manufactured by Huntsman International LLC. or the like.

(c) Further substituent

Incidentally, the modifying group may further have a substituent to (a) hydrocarbon group and/or (b) polymer group. The substituent includes, for example, an alkoxy group having carbon atoms of 1 or more and 6 or less such as a methoxy group, an ethoxy group, a propoxy group, an isopropoxy group, a butoxy group, an isobutoxy group, a sec-butoxy group, a tert-butoxy group, a pentyloxy group, an isopentyloxy group, and a hexyloxy group; an alkoxy-carbonyl group having carbon atoms of 1 or more and 6 or less in an alkoxy group such as a methoxycarbonyl group, an ethoxycarbonyl group, a propoxycarbonyl group, an isopropoxycarbonyl group, a butoxycarbonyl group, an isobutoxycarbonyl group, a sec-butoxycarbonyl group, a tert-butoxycarbonyl group, a pentyloxycarbonyl group, and an isopentyloxycarbonyl group; a halogen atom such as a fluorine atom, a chlorine atom, a bromine atom, an iodine atom; an acyl group having carbon atoms of 1 or more and 6 or less such as an acetyl group, a propionyl group; an aralkyl group; an aralkyloxy group; an alkylamino group having carbon atoms of 1 or more and 6 or less; a dialkylamino group having carbon atoms of 1 or more and 6 or less in an alkyl group; and a hydroxy group.

(Method for Producing Component (A))

The component (A) is preferably produced, for example, by introducing anionic group to the raw material cellulose fibers to produce anion-modified cellulose fibers (step 1), and subsequently introducing a modifying group to an anionic group of anion-modified cellulose fibers (step 2).

[Step 1]

< Raw Material Cellulose Fiber >

The cellulose fibers which are raw materials of anion-modified cellulose fibers are preferably natural cellulose fibers from the environmental viewpoint, and the natural cellulose fibers include, for example, those from wooden pulp

such as pulp from needle-leaf trees and pulp from broad-leaf trees; cotton pulp from cotton linter and cotton lint; non-wooden pulp such as maize straw pulp and bagasse pulp; bacteria cellulose; and the like, and these can be used alone or in a combination of two or more kinds.

The average fiber diameter of the raw material cellulose fibers is preferably 5 μm or more, from the viewpoint of handling properties and costs, and preferably 500 μm or less from the same viewpoint. The average fiber diameter of the raw material cellulose fibers can be obtained by the method described in Examples mentioned later.

In addition, the average fiber length of the raw material cellulose fibers is, but not particularly limited to, preferably 5 μm or more, from the viewpoint of availability and costs, and preferably 5,000 μm or less from the same viewpoint. The average fiber length of the raw material cellulose fibers can be measured by the method described in Examples mentioned later.

< Method for Introducing Anionic Group >

The method for introducing a carboxyl group to cellulose fibers as an anionic group includes, for example, a method of oxidizing a hydroxy group of cellulose fibers to convert to a carboxyl group, or a method of reacting a hydroxy group of cellulose fibers with at least one kind selected from a group consisting of a compound having a carboxyl group, an acid anhydride of a compound having a carboxyl group, and derivatives thereof.

The method for oxidizing a hydroxy group of cellulose fibers includes, for example, a method for reacting an oxidizing agent such as a sodium hypochlorite and a bromide such as a sodium bromide with the raw material cellulose fibers using 2,2,6,6-tetramethyl-1-piperidin-N-oxyl (TEMPO) as a catalyst, as described in Japanese Patent Laid-Open No. 2015-143336 or Japanese Patent Laid-Open No. 2015-143337. By carrying out an oxidization of cellulose fibers using TEMPO as a catalyst, a hydroxymethyl group ($-CH_2OH$) at C6 of a glucose unit constituting cellulose fibers is selectively converted to a carboxyl group (-COOH), thereby obtaining the aforementioned carboxy modified cellulose fiber.

The method for introducing a sulfonic acid group to cellulose fibers as an anionic group includes a method for adding a sulfuric acid to cellulose fibers and heating the mixture and the like.

The method for introducing a phosphate (phosphite) group to cellulose fibers as an anionic group includes a method for adding powder or aqueous solution of a phosphate (phosphite) or a phosphate (phosphite) derivative to cellulose fibers in a dry state or a wet state, and a method for adding aqueous solution of a phosphate (phosphite) or a phosphate (phosphite) derivative to a dispersion of cellulose fibers and the like. In a case where these methods are adopted, dehydration treatment, heating treatment and the like are generally carried out after mixing or adding powder or aqueous solution of a phosphate (phosphite) or a phosphate (phosphite) derivative.

[Step 2]

The introduction of a modifying group to an anionic group of the anion-modified cellulose fibers is achieved by reacting a compound for introducing a modifying group to an anionic group (a compound for modification) and the anion-modified cellulose fibers, thereby obtaining the modified cellulose fibers of the component (A). In a case where cellulose fibers having a modifying group via amide bond is obtained, Japanese Patent Laid-Open No. 2015-143337 can be referred to as a method for introducing a modifying group.

A post-processing may be appropriately carried out to remove unreacted compounds and the like after termination of step 2. As a method for post-processing, for example, a filtration, a centrifugation, a dialysis and the like can be used.

(Cellulose fibrillation process)

Micrometer-scale cellulose fibers can be fibrillated to nanometer scale cellulose fibers by fibrillating the cellulose fibers at any stage of the method for producing the component (A). The cellulose fibrillation step is preferably carried out before the step 2 or after the step 2, and more preferably carried out after the step 2, from the viewpoint of efficiently fibrillating the cellulose fibers. In addition, it is preferable since fibrillating the average fiber diameter of cellulose fibers to a nanometer size can increase the viscosity of the metal particle-containing composition.

A known fibrillating treatment method can be adopted as a treatment. For example, in a case where the average fiber diameter of the component (A) is made to be a nanometer size, a treatment method using a grinder such as a mass-colloider or a treatment method using a highpressure homogenizer and the like in the medium may be carried out.

The medium includes, for example, water, alcohols having carbon atoms of 1 to 6 such as water, methanol, ethanol, propanol, and 1-methoxy-2-propanol (PGME); ketones having 3 to 6 carbon atoms such as acetone, methyl ethyl ketone, methyl isobutyl ketone, and cyclohexanone; esters having 4 to 6 carbon atoms such as ethyl acetate and butyl acetate; saturated hydrocarbon or unsaturated hydrocarbon having 5 or 6 carbon atoms; aromatic hydrocarbon such as benzene and toluene; halogenated hydrocarbons such as methylene chloride and chloroform; lower alkyl ether having 2 to

5 carbon atoms; polar solvents such as N,N-dimethylformamide (DMF), N,N-dimethylacetamide, and dimethyl sulfoxide and the like. These can be used alone or in a combination of two or more kinds. The amount of the medium used may be an effective amount capable of dispersing cellulose fibers, and preferably 1 time by mass or more and preferably 500 times by mass or less based on cellulose fibers.

(Fiber Shortening Treatment)

The cellulose fibers may be subjected to a fiber shortening treatment at any stage of the method for producing the component (A).

The fiber shortening treatment can be carried out by adopting (i) alkali treatment, (ii) acid treatment, and (iii) at least one kind of treatment method selected from a group consisting of heat treatment, ultraviolet treatment, electron-beam treatment, mechanical treatment, and enzyme treatment.

(Property of Component (A))

The main property of the modified cellulose fibers having a modifying group in an anionic group of anion-modified cellulose fibers via a covalent bond as the component (A) of the present invention is as follows.

[Crystal Structure]

The component (A) preferably has a cellulose type I crystal structure from the viewpoint of increasing the viscosity of the metal particle-containing composition.

The crystallinity of the component (A) is preferably 20% or more, more preferably 25% or more, even more preferably 30% or more, even more preferably 35% or more, and even more preferably 40% or more from the viewpoint of increasing the viscosity of the composition for metal particles. In addition, the crystallinity is preferably 90% or less, more preferably 85% or less, and even more preferably 80% or less from the viewpoint of availability of raw materials. Incidentally, in the present specification, the crystallinity of the cellulose fibers is a cellulose type I crystallinity calculated from a diffraction intensity value by an X-ray diffraction method, and can be measured according to a method in the Examples mentioned later. Here, "cellulose type I" is a crystalline form of a natural cellulose, and "cellulose type I crystallinity" means the proportion of crystal region in a whole cellulose fiber. The presence or absence of the cellulose type I crystallinity can be judged by having a peak at 2θ = 22.6° in an X-ray diffraction measurement.

[Average Fiber Diameter]

The component (A) is preferably a component which was subjected to a fibrillating treatment to become a nanometer size. Therefore, the average fiber diameter of the component (A) is preferably 1 nm or more and more preferably 2 nm or more from the viewpoint of handling properties, availability, and costs. In addition, the average fiber diameter is preferably 300 nm or less, more preferably 200 nm or less, even more preferably 100 nm or less, even more preferably 50 nm or less, even more preferably 30 nm or less, even more preferably 20 nm or less, even more preferably 15 nm or less, even more preferably 10 nm or less, and even more preferably 5 nm or less, from the viewpoint of handling properties, dispersibility, and increasing the viscosity of the metal particle-containing composition.

[Average Fiber Length]

The average fiber length of the component (A) is preferably 10 nm or more, more preferably 30 nm or more, even more preferably 50 nm or more, even more preferably 80 nm or more, even more preferably 100 nm or more, even more preferably 130 nm or more, even more preferably 150 nm or more, even more preferably 180 nm or more, and even more preferably 200 nm or more from the viewpoint of increasing the viscosity of the metal particle-containing composition. In addition, the average fiber length is preferably 1000 nm or less, more preferably 500 nm or less, even more preferably 400 nm or less, even more preferably 350 nm or less, and even more preferably 320 nm or less.

[Average Aspect Ratio (Average Fiber Length/Average Fiber Diameter)]

The average aspect ratio (average fiber length/average fiber diameter) of the component (A) is preferably 5 or more, more preferably 10 or more, even more preferably 30 or more, even more preferably 50 or more, even more preferably 70 or more, and even more preferably 80 or more, and preferably 300 or less, more preferably 200 or less, even more preferably 120 or less, and even more preferably 95 or less from the viewpoint of increasing the viscosity of the metal

particle-containing composition.

The average fiber diameter, the average fiber length, and the average aspect ratio of the component (A) can be obtained by the method described in Examples mentioned later.

[Amount of Bond and Degree of introduction of Modifying Group]

The amount of bond of a modifying group in the component (A) is preferably 0.01 mmol/g or more, more preferably 0.1 mmol/g or more, even more preferably 0.3 mmol/g or more, and even more preferably 0.6 mmol/g or more, and preferably 3.0 mmol/g or less, more preferably 2.0 mmol/g or less, even more preferably 1.4 mmol/g or less, and even more preferably 1.0 mmol/g or less from the viewpoint of increasing the viscosity of the metal particle-containing composition.

The Degree of introduction of a modifying group in the component (A) is preferably 10 mol% or more, more preferably 15 mol% or more, even more preferably 20 mol% or more, even more preferably 30 mol% or more, even more preferably 40 mol% or more, and even more preferably 50 mol% or more from the viewpoint of dispersibility, and preferably 100 mol% or less, more preferably 90 mol% or less, and even more preferably 80 mol% or less from the viewpoint of increasing the productivity of the modified cellulose. In a case where two or more kinds of optional modifying groups are introduced at the same time as a modifying group, the total Degree of introduction is preferably within the aforementioned range and within the range which does not exceed the upper limit of 100 mol%.

The amount of bond and Degree of introduction of a modifying group can be adjusted according to the kind and added amount of compound for modification, reaction temperature, reaction time, the kind of solvent and the like. "The amount of bond of a modifying group (mmol/g)" and "the Degree of introduction (mol%)" are an amount and a rate in which a modifying group is introduced (bound) in an anionic group in the modified cellulose fibers. The amount of bond and Degree of introduction of a modifying group in the modified cellulose fibers is calculated by the method described in Examples mentioned later, for example in a case where an anionic group is a carboxyl group.

[Glucose Unit]

The content of glucose unit in the component (A) is preferably 1% by mass or more, more preferably 10% by mass or more, and even more preferably 30% by mass or more from the viewpoint of increasing the viscosity of the metal particle-containing composition. In addition, the content of glucose unit is preferably 95% by mass or less, more preferably 80% by mass or less, even more preferably 70% by mass or less, even more preferably 60% by mass or less, even more preferably 50% by mass or less, and even more preferably 40% by mass or less from the viewpoint of increasing the content of metal particles as a component (B).

The content of the component (A) in the metal particle-containing composition of the present invention is preferably 0.01% by mass or more, more preferably 0.05% by mass or more, and even more preferably 0.1% by mass or more from the viewpoint of increasing the viscosity of the metal particle-containing composition. In addition, the content of the component (A) is preferably 1.0% by mass or less, more preferably 0.6% by mass or less, even more preferably 0.4% by mass or less, even more preferably 0.3% by mass or less, and even more preferably 0.2% by mass or less from the viewpoint of increasing the content of metal particles as a component (B). More specifically, the content of the component (A) is preferably 0.01% by mass or more and 1.0% by mass or less, more preferably 0.05% by mass or more and 0.6% by mass or less, even more preferably 0.1% by mass or more and 0.4% by mass or less, even more preferably 0.1% by mass or more and 0.3% by mass or less, and even more preferably 0.1% by mass or more and 0.2% by mass or less.

In the metal particle-containing composition of the present invention, the content of the component (A) to 100 parts by mass of the component (B) is preferably 0.01 parts by mass or more, more preferably 0.05 parts by mass or more, and even more preferably 0.1 parts by mass or more from the viewpoint of increasing the viscosity of the metal particle-containing composition. In addition, the content of the component (A) is preferably 10 parts by mass or less, more preferably 5 parts by mass or less, even more preferably 1 part by mass or less, even more preferably 0.5 parts by mass or less, and even more preferably 0.2 parts by mass or less from the viewpoint of increasing the content of metal particles as the component (B). More specifically, the content of the component (A) is preferably 0.01 parts by mass or more and 10 parts by mass or less, more preferably 0.05 parts by mass or more and 5 parts by mass or less, even more preferably 0.1 parts by mass or more and 1 part by mass or less, even more preferably 0.1 parts by mass or more and 0.5 parts by mass or less, and even more preferably 0.1 parts by mass or more and 0.2 parts by mass or less.

The content of glucose unit contained in the component (A) in the metal particle-containing composition of the present invention is preferably 0.01% by mass or more, more preferably 0.02% by mass or more, and even more preferably 0.03% by mass or more from the viewpoint of increasing the viscosity of the metal particle-containing composition. In addition, the content of glucose unit is preferably 1% by mass or less, more preferably 0.5% by mass or less, even more preferably 0.2% by mass or less, and even more preferably 0.1% by mass or less from the viewpoint of increasing the content of metal particles as the component (B). More specifically, the content of glucose unit is preferably 0.01% by mass

or more and 1% by mass or less, more preferably 0.02% by mass or more and 0.5% by mass or less, even more preferably 0.03% by mass or more and 0.2% by mass or less, and even more preferably 0.03% by mass or more and 0.1% by mass or less.

In the metal particle-containing composition of the present invention, the content of glucose unit contained in the component (A) to 100 parts by mass of the component (B) is preferably 0.003 parts by mass or more, more preferably 0.005 parts by mass or more, even more preferably 0.01 parts by mass or more, and even more preferably 0.03 parts by mass or more from the viewpoint of increasing the viscosity of the metal particle-containing composition. In addition, the content of glucose unit is preferably 5 parts by mass or less, more preferably 1 part by mass or less, even more preferably 0.5 parts by mass or less, even more preferably 0.2 parts by mass or less, and even more preferably 0.1 parts by mass or less from the viewpoint of increasing the content of metal particles as the component (B). More specifically, the content of glucose unit is preferably 0.003 parts by mass or more and 5 parts by mass or less, more preferably 0.005 parts by mass or more and 5 parts by mass or less, even more preferably 0.01 parts by mass or more and 1 part by mass or less, even more preferably 0.03 parts by mass or more and 0.5 parts by mass or less, even more preferably 0.03 parts by mass or more and 0.2 parts by mass or less, and even more preferably 0.03 parts by mass or more and 0.1 parts by mass or less.

< Component (B): Metal Particles >

The metal particle-containing composition of the present invention contains metal particles as the component (B) (hereinafter may be referred to merely as "component (B)").

In addition, since the component (B) is metal particles, the metal particle-containing composition of the present invention is used as a paste for printing or an ink, thereby sintering the paint film and forming an electrically conductive member.

The metals (metal atom) constituting metal particles include Group 4 transition metals such as titanium and zirconium, Group 5 transition metals such as vanadium and niobium, Group 6 transition metals such as chrome, molybdenum, and tungsten, Group 7 transition metals such as manganese, technetium, and rhenium, Group 8 transition metals such as iron and ruthenium, Group 9 transition metals such as cobalt, rhodium, and iridium, Group 10 transition metals such as nickel, palladium, and platinum, Group 11 transition metals such as copper, silver, and gold, Group 12 transition metals such as zinc and cadmium, Group 13 transition metals such as aluminum, gallium, and indium, Group 14 transition metals such as germanium, tin, and lead, and the like. One kind of metal constituting metal particles may be used as individual metal, and two or more kinds thereof may be used together as an alloy. Especially from the viewpoint of decreasing the resistivity of metal film obtained, the metal constituting metal particles preferably contains at least one kind selected from a group consisting of metals in groups 4 to 14 and periods 4 to 6, and more preferably contains at least one kind selected from a group consisting of metals in groups 4 to 11 and periods 4 to 6.

The metal constituting metal particles contains, from the viewpoint of decreasing the resistivity of metal film obtained, more specifically, more preferably at least one kind selected from a group consisting of copper, silver, nickel and tin, and even more preferably copper or silver, and even more preferably copper.

The total content of metals in groups 4 to 14 and periods 4 to 6 in the component (B) is preferably 80% by mass or more, more preferably 90% by mass or more, even more preferably 95% by mass or more, even more preferably 98% by mass or more, and even more preferably 99% by mass or more from the viewpoint of decreasing the resistivity of metal film obtained.

The total content of metals in groups 4 to 11 and periods 4 to 6 in the component (B) is preferably 80% by mass or more, more preferably 90% by mass or more, even more preferably 95% by mass or more, even more preferably 98% by mass or more, and even more preferably 99% by mass or more from the viewpoint of decreasing the resistivity of metal film obtained.

The total content of at least one kind selected from a group consisting of copper, silver, nickel and tin in the component (B) is preferably 80% by mass or more, more preferably 90% by mass or more, more preferably 95% by mass or more, and even more preferably 99% by mass or more from the viewpoint of decreasing the resistivity of metal film obtained.

The content of copper or silver in the component (B) is preferably 80% by mass or more, more preferably 90% by mass or more, even more preferably 95% by mass or more, even more preferably 98% by mass or more, and even more preferably 99% by mass or more from the viewpoint of decreasing the resistivity of metal film obtained.

The metal constituting metal particles is preferably one or more kind selected from a group consisting of metals in groups 4 to 14 and periods 4 to 6, and more preferably one or more kind selected from a group consisting of metals in transition groups 4 to 11 and periods 4 to 6 from the viewpoint of decreasing the resistivity of metal film obtained.

The metal constituting metal particles is more specifically, more preferably copper, silver, nickel or tin, and even more preferably copper or silver, and even more preferably copper from the viewpoint of decreasing the resistivity of metal film obtained.

The kind of metals can be confirmed by a high-frequency inductively coupled plasma emission spectral analysis

method.

The average particle size of the component (B) is preferably 0.1 μm or more, more preferably 0.3 μm or more, even more preferably 0.4 μm or more, even more preferably 0.5 μm or more, even more preferably 0.6 μm or more, and even more preferably 0.7 μm or more from the viewpoint of enhancing the dispersion stability of metal particles and increasing the viscosity of the metal particle-containing composition. In addition, the average particle size is preferably 10 μm or less, more preferably 8 μm or less, even more preferably 6 μm or less, even more preferably 4 μm or less, and even more preferably 2 μm or less from the same viewpoint.

Here, the average particle size of the component (B) is a particle size having cumulative volume of 50% (D50) obtained by a measurement of granularity distribution on a volume basis based on a laser diffraction/scattering method. In addition, in a case where a product is obtained and used as the component (B), the value of the particle size in the catalogue of the manufacturer may be employed as the particle size of the component (B).

The granularity of the component (B) can also be evaluated by measuring the amount passing through the sieve. The granularity of the component (B) is preferably the amount passing through the sieve having an opening of 300 μm of 95% or more, more preferably the amount passing through the sieve having an opening of 150 μm of 95% or more, and even more preferably the amount passing through the sieve having an opening of 75 μm of 95% or more, from the viewpoint of enhancing the dispersion stability of metal particles and increasing the viscosity of the metal particle-containing composition. In addition, in a case where a product is obtained and used as the component (B), the value of the granularity in the catalogue of the manufacturer or in the product specifications may be employed as the granularity of the component (B).

In addition, a specific surface area of the component (B) is preferably 0.1 $m^2/g$ or more, more preferably 0.3 $m^2/g$ or more, and even more preferably 0.5 $m^2/g$ or more, and preferably 3.0 $m^2/g$ or less, more preferably 2.0 $m^2/g$ or less, and even more preferably 1.5 $m^2/g$ or less from the viewpoint of a conductivity and the like of an electrically conductive member obtained. The specific surface area of the component (B) can be measured by a BET method. In addition, in a case where a product is obtained and used as the component (B), the value of the specific surface area in the catalogue of the manufacturer may be employed as the specific surface area of the component (B).

The content of the component (B) to 100 parts by mass of solid ingredients in the metal particle-containing composition of the present invention is 70 parts by mass or more, and preferably 80 parts by mass or more, more preferably 85 parts by mass or more, even more preferably 90 parts by mass or more, even more preferably 95 parts by mass or more, even more preferably 96 parts by mass or more, even more preferably 97 parts by mass or more, and even more preferably 98 parts by mass or more from the viewpoint of increasing the content of metal particles as the component (B), and the content of the component (B) is preferably 99.9 parts by mass or less from the viewpoint of dispersion stability of metal particles and increasing the viscosity of the metal particle-containing composition.

In addition, the content of the component (B) in the metal particle-containing composition of the present invention is preferably 50% by mass or more, more preferably 60% by mass or more, even more preferably 70% by mass or more, even more preferably 80% by mass or more, and even more preferably 85% by mass or more from the viewpoint of increasing the content of metal particles as the component (B). In addition, the content of the component (B) is preferably 97% by mass or less, more preferably 95% by mass or less, even more preferably 93% by mass or less, and even more preferably 91% by mass or less from the viewpoint of dispersion stability of metal particles and increasing the viscosity of the metal particle-containing composition.

< Component (C): Organic Compound Which is Liquid at 25°C Under 1 Atm >

The metal particle-containing composition of the present invention contains an organic compound which is liquid at 25°C under 1 atm (hereinafter may be referred to merely as "Compound (C)").

The compound (C) is preferably a hydrophobic solvent from the viewpoint of workability such as using together with metal particles. The dissolution amount of the hydrophobic solvent in 100 g of water (20°C under 1 atm) is preferably 100 g or less, more preferably 50 g or less, even more preferably 30 g or less, and even more preferably 10 g or less.

The compound (C) includes, specifically, alcohol-based solvents such as methanol, normal and isopropanol, t-butanol, 1-butanol, 1-hexanol, 1-hexanal, and glycerol; ketone-based solvents such as acetone, methyl ethyl ketone (MEK), methyl isobutyl ketone (MIBK), cyclohexanone, methyl hexyl ketone, diisobutyl ketone, diacetone alcohol, and isophorone; ether-based solvents such as diethyl ether, tetrahydrofuran (THF), and dioxane; ester-based solvents such as methyl acetate, ethyl acetate, butyl acetate, ethyl lactate, polycarboxylic acid ester (for example, phthalic acid ester, succinate acid ester, adipic acid ester and the like), aliphatic polyol fatty acid ester such as glycerol; high polarity solvents such as N,N-dimethylformamide (DMF), dimethyl sulfoxide (DMSO), ethylene carbonate, N,N-Dimethylacetamide (DMAc), and N-Methylpyrrolidone; halogen-based solvents such as methylene chloride, dichloromethane, chloroform, trichloroethylene, perchloroethylene, and chlorobenzene; non-aromatic hydrocarbon-based solvents such as hexane, petroleum ether, liquid paraffin, and squalane, squalene; aromatic hydrocarbon-based solvents such as benzene, toluene, and xylene; nitrile-based solvents such as acetonitrile; glycol ether solvents such as t-butyl glycol, methyldiglycol,

ethyldiglycol, diethylene glycol, triethylene glycol, butyl diglycol, 1-methoxy-2-propanol, methyl dipropylene glycol, 3-methoxybutanol, 3-methyl-3-methoxybutanol, (mono, di, tri, poly) ethylene glycol methyl ether, ethylene glycol monophenyl ether, (mono, di, tri, poly) ethylene glycol dimethyl (ethyl) ether, (mono, di, tri, poly) ethylene glycol monobutyl ether, polyethylene glycol, methoxypolyethylene glycol, polyoxyethylene bisphenol A, and polyoxypropylene bisphenol A (the glycol ether solvents include the following glycol ether (ester) solvents: glycol ether ester solvents such as butyl cellosolve acetate, ethyl carbitol acetate, butyl carbitol acetate, propylene glycol monomethyl ether acetate, methoxybutyl acetate, methylmethoxybutyl acetate, ethyl 3-ethoxy propionate, propylene glycol monomethyl ether propionate, and dimethyl carbonate); polymerizable compounds, for example, [epoxy prepolymer (for example, bisphenol type, novolak type, biphenyl type, biphenyl aralkyl type, arylalkylene type, tetra phenylolethane type, naphthalene type, anthracene type, phenoxy type, dicyclopentadiene type, norbornene type, adamantane type, fluorene type, and glycidyl methacrylate copolymer and the like); isocyanate (for example, aromatic series such as tolylene diisocyanate and diphenylmethane diisocyanate, and fatty series such as hexamethylene diisocyanate, xylylene diisocyanate, isophorone diisocyanate, and tetramethyl xylylene diisocyanate); acryl prepolymer (for example, methyl acrylate, methyl methacrylate, ethyl acrylate, ethyl methacrylate, butyl acrylate, butyl methacrylate, n-hexyl acrylate, n-hexyl acrylate, n-hexyl methacrylate, 2-ethylhexyl acrylate, 2-ethylhexyl methacrylate, nonanediol diacrylate, phenoxyethyl acrylate, an adduct of (meth) acrylate of bisphenol A alkylene oxide, epoxy (meth) acrylate (bisphenol A-type epoxy (meth)acrylate, novolak type epoxy (meth) acrylate and the like); polyester (meth) acrylate (for example, aliphatic polyester type (meth) acrylate, aromatic polyester type (meth) acrylate and the like); urethane (meth) acrylate (polyester type urethane (meth) acrylate, polyether type urethane (meth) acrylate and the like); silicone (meth) acrylate, mono (meth) acrylate of cyanoacrylate, and the like] and oligomer of these polymerizable compounds and the like; natural resins such as rosin; fatty acids such as oleic acid, palmitic acid, stearic acid and the like; animal and vegetable oils such as olive oil, jojoba oil, castor oil and the like; silicone oil, fluorine-based inert liquid, process oil and the like.

In a case where the metal particle-containing composition of the present invention is used as a paste for printing or an ink, the component (C) preferably functions as a dispersion medium. The component (C) as a dispersion medium preferably contains at least one kind selected from a group consisting of (poly)alkylene glycol, (poly)alkylene glycol derivative, terpene alcohol, glycerin (boiling point: 290°C, molecular weight: 92), and glycerin derivative from the viewpoint of dispersion stability of metal particles which is the component (B) and from the viewpoint of increasing the viscosity of the metal particle-containing composition to enhance the printing dimensional accuracy.

The "(poly)alkylene glycol" as used herein means at least one kind selected from a group consisting of alkylene glycol and polyalkylene glycol. "(Poly)alkylene glycol derivative" means the same. In addition, "polyalkylene glycol" as used herein means a glycol in which two or more alkylene glycol structures are connected.

The (poly)alkylene glycol preferably includes, for example, ethylene glycol (boiling point: 197°C, molecular weight: 62), propylene glycol (boiling point: 188°C, molecular weight: 76), diethylene glycol (boiling point: 244°C, molecular weight: 106), triethylene glycol (boiling point: 287°C, molecular weight: 150), dipropylene glycol (boiling point: 232°C, molecular weight: 134), tripropylene glycol (boiling point: 273°C, molecular weight: 192), tetrapropylene glycol (boiling point: 300°C or more, molecular weight: 250), polyethylene glycol (average molecular weight is preferably 180 or more and 1000 or less, more preferably 180 or more and 600 or less, and even more preferably 180 or more and 400 or less), polypropylene glycol (average molecular weight is preferably 232 or more and 1000 or less, more preferably 232 or more and 600 or less, and even more preferably 232 or more and 500 or less), 2-ethyl-1,3-hexanediol (boiling point: 244°C, molecular weight: 146) and the like. Especially, one or more kind selected from a group consisting of diethylene glycol, dipropylene glycol, and polyethylene glycol (number average molecular weight is preferably 180 or more and 1000 or less, more preferably 180 or more and 600 or less, and even more preferably 180 or more and 400 or less) is more preferred, and one or more kind selected from a group consisting of diethylene glycol and polyethylene glycol (average molecular weight is 180 or more and 400 or less) is even more preferred.

The (poly)alkylene glycol derivative includes, for example, a compound in which a hydroxy group at the end of the (poly)alkylene glycol is etherified or esterified or the like.

The compound in which hydroxy groups at the both end of the polyalkylene glycol is etherified or esterified includes, for example, diethylene glycol dimethyl ether (boiling point: 162°C, molecular weight: 134), diethylene glycol dibutyl ether (boiling point: 254°C, molecular weight: 218), triethylene glycol dimethyl ether (boiling point: 216°C, molecular weight: 178), diethylene glycol monoethyl ether acetate (boiling point: 217°C, molecular weight: 176), diethylene glycol monobutyl ether acetate (boiling point: 247°C, molecular weight: 204) and the like.

The compound in which hydroxy groups at one end of the polyalkylene glycol is etherified or esterified includes, for example, diethylene glycol monoethyl ether (boiling point: 202°C, molecular weight: 134), diethylene glycol monobutyl ether (boiling point: 231°C, molecular weight: 162), diethylene glycol monohexyl ether (boiling point: 258°C, molecular weight: 190) and the like. Especially diethylene glycol monobutyl ether is preferred.

The terpene alcohol includes, for example, monoterpenic alcohols such as $\alpha$-terpineol (boiling point: 219°C, molecular weight: 154), linalool (boiling point: 198°C, molecular weight: 154), geraniol (boiling point: 229°C, molecular weight: 154), and citronellol (boiling point: 225°C, molecular weight: 156). Especially $\alpha$-terpineol is preferred.

The glycerin derivative is not particularly limited, as long as the derivative is a solvent containing a structure derived from glycerin, and the glycerin derivative includes, for example, an ether derivative of glycerin, an ester derivative of glycerin, an alkylene oxide adduct of polyglycerin or glycerin (for example, ethylene oxide adduct or propylene oxide adduct) and the like. The polyglycerin includes, for example, a diglycerin, a triglycerin and the like, and a commercially available polyglycerin includes, for example, polyglycerin #310, polyglycerin #500, polyglycerin #750 and the like manufactured by Sakamoto Yakuhin Kogyo Co., Ltd. The ether derivative of glycerin includes, for example, 3-(2-ethylhexyloxy)-1, 2- propanediol (boiling point: 325°C, molecular weight: 204) and the like. The ester derivative of glycerin includes, for example, glyceryl tributyrate (boiling point: 305°C, molecular weight: 302) and the like.

The component (C) preferably includes at least one kind selected from the group consisting of (poly)alkylene glycol, (poly)alkylene glycol derivative, and terpene alcohol, more preferably includes at least one kind selected from diethylene glycol, dipropylene glycol, polyethylene glycol (number average molecular weight is preferably 180 or more and 1000 or less, more preferably 180 or more and 600 or less, and even more preferably 180 or more and 400 or less), α-terpineol and diethylene glycol monobutyl ether, even more preferably includes at least one kind selected from diethylene glycol, polyethylene glycol (number average molecular weight is 180 or more and 400 or less), α-terpineol and diethylene glycol monobutyl ether, from the viewpoint of the dispersion stability of metal particles and from the viewpoint of increasing the viscosity of the metal particle-containing composition to enhance the printing dimensional accuracy.

Furthermore, in a case where the component (C) is a metal particle which can be sintered, the boiling point of the component (C) at 1 atm is preferably 180°C or more, more preferably 200°C or more, even more preferably 210°C or more, and even more preferably 215°C or more from the viewpoint of increasing the sinterability of metal particles. In addition, the boiling point of the component (C) is preferably 400°C or less, more preferably 360°C or less, even more preferably 330°C or less, and even more preferably 300°C or less from the same viewpoint. Incidentally, in a case where two or more kinds of liquid organic compounds are used in combination as the component (C), the boiling point of the component (C) is a weighted average value which is weighted with the content (% by mass) of each liquid organic compound.

In addition, the molecular weight of the component (C) is, from the viewpoint of increasing the sinterability of metal particles, preferably 60 or more, more preferably 100 or more, even more preferably 130 or more, and even more preferably 150 or more, and from the same viewpoint, preferably 450 or less, more preferably 400 or less, even more preferably 350 or less, and even more preferably 300 or less. In a case where two or more kinds of liquid organic compounds are used in combination as the component (C), the molecular weight of the component (C) is a weighted average value which is weighted with the content (% by mass) of each liquid organic compound.

Especially, from the viewpoint of increasing the sinterability of metal particles, the boiling point of the component (C) is preferably 180°C or more, and the molecular weight of the component (C) is preferably 450 or less.

The total content of (poly)alkylene glycol, (poly)alkylene glycol derivative, terpene alcohol, glycerin, and glycerin derivative (hereinafter may be referred to as "Component C1") in the component (C) is, from the viewpoint of increasing the sinterability of metal particles, preferably 50% by mass or more, more preferably 70% by mass or more, even more preferably 80% by mass or more, even more preferably 90% by mass or more, even more preferably 95% by mass or more, even more preferably 98% by mass or more, even more preferably 99% by mass or more, even more preferably 99.9% by mass or more, and even more preferably substantially 100% by mass. Here, "substantially 100% by mass" means that a component which is unintentionally contained may be contained. The component which is unintentionally contained includes, for example, components other than the component C1 contained in the component C1.

The total content of (poly)alkylene glycol, (poly)alkylene glycol derivative and terpene alcohol (hereinafter may be referred to as "Component C2") in the component (C) is, from the viewpoint of increasing the sinterability of metal particles, preferably 50% by mass or more, more preferably 70% by mass or more, even more preferably 80% by mass or more, even more preferably 90% by mass or more, even more preferably 95% by mass or more, even more preferably 98% by mass or more, even more preferably 99% by mass or more, even more preferably 99.9% by mass or more, and even more preferably substantially 100% by mass. Here, "substantially 100% by mass" means that a component which is unintentionally contained may be contained. The component which is unintentionally contained includes, for example, components other than the component C2 contained in the component C2.

The total content of diethylene glycol, polyethylene glycol (number average molecular weight is 180 or more and 400 or less), α-terpineol and diethylene glycol monobutyl ether (hereinafter may be referred to as "Component C3") in the component (C) is, from the viewpoint of increasing the sinterability of metal particles, preferably 50% by mass or more, more preferably 70% by mass or more, even more preferably 80% by mass or more, even more preferably 90% by mass or more, even more preferably 95% by mass or more, even more preferably 98% by mass or more, even more preferably 99% by mass or more, even more preferably 99.9% by mass or more, and even more preferably substantially 100% by mass. Here, "substantially 100% by mass" means that a component which is unintentionally contained may be contained. The component which is unintentionally contained includes, for example, components other than the component C3 contained in the component C3.

The content of the component (C) in the metal particle-containing composition of the present invention is, from the viewpoint of enhancing the dispersion stability of metal particles, preferably 4% by mass or more, more preferably 5% by

mass or more, and even more preferably 6% by mass or more, and from the viewpoint of handling properties of the metal particle-containing composition, preferably 40% by mass or less.

Especially in a case where the metal particle-containing composition of the present invention is used as a paste for printing or ink, from the viewpoint of enhancing the printing dimensional accuracy of the metal particle-containing composition, the content of the component (C) is more preferably 30% by mass or less, even more preferably 20% by mass or less, even more preferably 15% by mass or less, and even more preferably 13% by mass or less.

In the metal particle-containing composition of the present invention, the content of the component (C) to 100 parts by mass of the component (B) is, from the viewpoint of enhancing the dispersion stability of the metal particle-containing composition, preferably 1 part by mass or more, more preferably 5 parts by mass or more, even more preferably 8 parts by mass or more, and even more preferably 10 parts by mass or more, and from the viewpoint of increasing the viscosity of the metal particle-containing composition, preferably 20 parts by mass or less, more preferably 18 parts by mass or less, and even more preferably 15 parts by mass or less. More specifically, preferably 1 part by mass or more and 20 parts by mass or less, more preferably 5 parts by mass or more and 18 parts by mass or less, even more preferably 8 parts by mass or more and 15 parts by mass or less, and even more preferably 10 parts by mass or more and 15 parts by mass or less.

< Other Components >

The metal particle-containing composition of the present invention may contain water within a range not impairing the effect of the present invention. The content of water in the metal particle-containing composition is preferably 5% by mass or less, more preferably 1% by mass or less, even more preferably 0.5% by mass or less, even more preferably 0.1% by mass or less, and even more preferably 0.01% by mass or less, from the viewpoint of inhibiting the oxidization of a metal in a case where the metal particle is a metal, and from the viewpoint of increasing the dispersion stability, the preservation stability, and the viscosity of the metal particle-containing composition.

In addition, the metal particle-containing composition of the present invention may contain various additives in addition to the aforementioned components within a range not impairing the effect of the present invention. The additives include, for example, a plasticizer, a crystal nucleating agent, a filler (an organic filler), a hydrolysis inhibitor, a retardant, an antioxidant, a lubricant which is a hydrocarbon-based wax or an anion-based surfactant, an ultraviolet absorbent, an antistatic, an anti-clouding agent, a photostabilizer, a pigment different from the component (B), a mildewproof agent, a bactericidal agent, a foaming agent, and a surfactant; polysaccharides such as starches or alginic acid; natural proteins such as gelatin, animal glue, and casein; a tannin; a perfume; a fluid modifier; a leveling agent; a conductive agent; an ultraviolet dispersant; deodorant, or the like. In addition, other high molecular weight materials or other compositions can be added within a range not inhibiting the effect of the present invention.

The content of additives in the metal particle-containing composition of the present invention is preferably 5% by mass or less, more preferably 1% by mass or less, and even more preferably 0.5% by mass or less.

[Method for Producing the Metal Particle-Containing Composition]

The metal particle-containing composition of the present invention can be produced, for example, by mixing the components (A), (B), (C), and the aforementioned additives as necessary.

For example, the production of the aforementioned each component can be carried out by stirring using a known stirring device such as a rotation-revolution type stirring device, or by kneading using a known kneading device such as a closed kneader, an extruder with single-screw or twin-screw, a roll mill, or an open roll-type kneader, or by a solvent casting method, or by shearing using a shearing device such as a high shear processing machine.

[Physical Properties of the Metal Particle-Containing Composition]

The viscosity at 25°C (Pa • s) of the metal particle-containing composition of the present invention is, on the condition that the shearing speed is 1.0 $s^{-1}$, preferably 30 or more, more preferably 50 or more, even more preferably 90 or more, even more preferably 100 or more, even more preferably 120 or more, and even more preferably 140 or more, from the viewpoint of handling properties of the metal particle-containing composition and from the viewpoint of enhancing the printing dimensional accuracy of the metal particle-containing composition. On the other hand, the viscosity is preferably 500 or less, more preferably 400 or less, and even more preferably 300 or less from the viewpoint of workability of using as the metal particle-containing composition.

The method for measuring the viscosity in the present specification can be carried out by the method using a rheometer described in Examples mentioned later.

[Application of the Metal Particle-Containing Composition]

The metal particle-containing composition of the present invention can be used for various products without particular limitations. Specific example of products to which the metal particle-containing composition of the present invention can be applied includes, for example, foodstuffs, cosmetics, quasi-drugs, drugs, commodities, feeds, sundries, pesticide, and chemical industry products. More specifically, the products include household electric appliance parts, electronic materials (electronics), packaging containers, and in the field such as aerospace, civil engineering architecture, automobiles, in-vehicle, resin molding materials, insulating materials, paint, paste for printing, ink, coating agents, glue, repairing agents, adhesives, lubricants, sealing agents, insulators, sound absorbing agents, artificial leather materials, electronic materials, semiconductor materials, tires, automobile parts, fiber composite materials and the like. Especially, the metal particle-containing composition is suitably used for a paste for printing and ink. In addition, it is also suitably used for electronic materials, optic materials or structural materials.

The metal particle-containing composition of the present invention can be used especially for forming an electrically conductive member of various electrical and electronic equipment because the component (B) is metal particles. The electrically conductive member is preferably used for bonding agent such as a solder; antenna such as RFID (radio frequency identifier) tag; condenser such as MLCC (multi-layer ceramic condenser); electronic paper; image display equipment such as liquid crystal display and organic light-emitting diode display; organic light-emitting diode element; organic transistor; wiring board such as printed wiring board and flexible wiring board; organic solar battery; sensor such as flexible sensor and the like. Among the above, the metal particle-containing composition of the present invention is preferably used for bonding of plural metal members.

[Method for Producing Film]

The method for producing a film using the metal particle-containing composition of the present invention has a step for applying the metal particle-containing composition to a base material, and preferably further includes a step for drying a paint film of the metal particle-containing composition.

Specifically, the metal particle-containing composition is applied to a base material, for example, hard surfaces having materials such as glass, resin, metal, ceramic, concrete, wood, or stone, or fiber, skin, hair, paper and the like. The metal particle-containing composition can be favorably used for various surfaces located outside, for example, road equipment such as signboards, road signs, or traffic lights, body, glass surface or headlights of automobiles, airplanes, trains or ships, roofs, walls or windows of buildings, and in the field of coating for solar panels and the like.

The thickness of the paint film of the metal particle-containing composition to be applied to a base material is, from the viewpoint of durability of the film, preferably 10 μm or more, more preferably 20 μm or more, and even more preferably 30 μm or more, and from the viewpoint of applying properties, preferably 2000 μm or less and more preferably 1500 μm or less.

Next, the paint film of the metal particle-containing composition is dried and a film can be obtained. The drying condition may be either under reduced pressure or under ambient pressure, and the temperature range is preferably 15°C or more and 75°C or less. In addition, the time for drying is preferably for 10 minutes or more and 24 hours or less.

The thickness of the film obtained by the production method of the present invention is, but not particularly limited to, preferably 1 μm or more, more preferably 3 μm or more, and even more preferably 5 μm or more, from the viewpoint of durability of the film, and preferably 2000 μm or less, more preferably 1200 μm or less, even more preferably 500 μm or less, and even more preferably 200 μm or less, from the economical point of view.

Incidentally, the thickness of the film can be made to a desired value by setting the thickness of the paint film by an applying kit such as applicator, or by adjusting the amount applied by a spray or percentage of a medium and the like.

[Method for Producing Electrically conductive member]

The method for producing an electrically conductive member of the present invention has a step for applying the metal particle-containing composition to a substrate. In addition, from the viewpoint of conductivity, the metal particle-containing composition preferably contains metal particles as the component (B).

The electrically conductive member includes, for example, bonding agent such as a solder and an electronic circuit and the like.

The substrate includes, for example, glass, resins, metals, ceramics and the like.

Especially in a case where the electrically conductive member is the bonding agent, preferably a step of intercalating the metal particle-containing composition between plural metal members and heating the composition is further included. As a result, in a case where the metal particle-containing composition contains metal particles which can be sintered as the component (B), the metal particles can be sintered and can form bonding agent having excellent conductivity. Here, at least one of the metal members is the substrate mentioned above.

The temperature of the heating treatment in the above heating step is preferably 100°C or more, more preferably 150°C or more, and even more preferably 200°C or more from the viewpoint of bonding intensity and conductivity, and preferably 350°C or less, more preferably 300°C or less, and even more preferably 260°C or less from the viewpoint of improving low-temperature-sinterability and bonding intensity.

The heating treatment in the heating step can be carried out both under no pressure and under pressure; however, from the viewpoint of bonding intensity and conductivity, under pressure is preferred. The pressure of the heating treatment in the heating step is preferably 5 MPa or more, more preferably 8 MPa or more, even more preferably 10 MPa or more, and even more preferably 15 MPa or more from the viewpoint of improving low-temperature-sinterability and bonding intensity, and preferably 50 MPa or less, more preferably 30 MPa or less, and even more preferably 20 MPa or less from the viewpoint of productivity.

The time of the heating treatment in the heating step can be suitably adjusted depending on temperature and pressure of the heating treatment.

The atmosphere in the heating step may be an air atmosphere, inert gas atmosphere such as nitrogen gas, or reducible gas atmosphere such as hydrogen gas; however, nitrogen gas atmosphere is more preferred from the viewpoint of inhibiting oxidation of metal and safety.

The metal member to be bonded in the present invention includes, for example, metal based substrate or metallic substrate such as gold substrate, gold plated substrate, silver substrate, silver plated metal substrate, copper substrate, palladium substrate, palladium plated metal substrate, platinum substrate, platinum plated metal substrate, aluminum substrate, nickel substrate, nickel plated metal substrate, tin substrate, and tin plated metal substrate; metal parts such as electrode of insulating substrate and the like. The plural metal members used in the present invention may be the same kind of metal members or a different kind of metal members.

Among the above, the metal members preferably include at least one kind selected from the metal parts of gold substrate, gold plated substrate, silver substrate, silver plated metal substrate, copper substrate, palladium plated metal substrate, platinum substrate, platinum plated metal substrate, aluminum substrate, nickel substrate, nickel plated metal substrate, tin substrate, tin plated metal substrate, and insulating substrate.

The bonding of metal members of the present invention can be used for bonding of chip parts such as condenser or resistance with circuit substrate; bonding of semiconductor chips such as memory, diode, transistor, IC, or CPU with lead frame or circuit substrate; bonding of high heat generating semiconductor chips with cooling plate and the like.

The method for giving the metal particle-containing composition to metal members includes various application methods such as slot die coating, dip coating, spray coating, spin coating, doctor blading, knife edge coating, bar-coating; various patterning printing methods such as stencil printing, screen printing, flexography, photogravure, offset printing, dispenser printing, ink-jet printing and the like. The stencil printing is preferred among them.

The given amount of the metal particle-containing composition to metal members can be suitably adjusted according to the size and kind of metal members to be bonded.

With regard to the above embodiment, the present invention further discloses the following embodiment.

< 1 > A metal particle-containing composition containing the following component (A), component (B), and component (C);
wherein the content of the component (B) is 70 parts by mass or more, based on 100 parts by mass of solid ingredients in the metal particle-containing composition,

(A) a modified cellulose fiber having a modifying group in an anionic group of an anion-modified cellulose fiber via a covalent bond,
(B) metal particles, and
(C) an organic compound which is liquid at 25°C under 1 atm.

< 2 > The metal particle-containing composition according to < 1 >, wherein the average particle size of the component (B) is preferably 0.1 μm or more, more preferably 0.3 μm or more, even more preferably 0.4 μm or more, even more preferably 0.5 μm or more, even more preferably 0.6 μm or more, and even more preferably 0.7 μm or more.
< 3 > The metal particle-containing composition according to < 1 > or < 2 >, wherein the average particle size of the component (B) is preferably 10 μm or less, more preferably 8 μm or less, even more preferably 6 μm or less, even more preferably 4 μm or less, and even more preferably 2 μm or less.
< 4 > The metal particle-containing composition according to < 1 >, wherein the granularity of the component (B) is preferably 95% or more of the particles passing through a sieve having an opening of 300 μm, more preferably 95% or more of the particles passing through a sieve having an opening of 150 μm, and even more preferably 95% or more of the particles passing through a sieve having an opening of 75 μm.
< 5 > The metal particle-containing composition according to any one of < 1 > to < 4 >, wherein the content of the component (C) is preferably 1 part by mass or more, more preferably 5 parts by mass or more, even more preferably 8

parts by mass or more and even more preferably 10 parts by mass or more, based on 100 parts by mass of the component (B).

< 6 > The metal particle-containing composition according to any one of < 1 > to < 5 >, wherein the content of the component (C) is preferably 20 parts by mass or less, more preferably 18 parts by mass or less, and even more preferably 15 parts by mass or less, based on 100 parts by mass of the component (B).

< 7 > The metal particle-containing composition according to any one of < 1 > to < 4 >, wherein the content of the component (C) is preferably 1 part by mass or more and 20 parts by mass or less, more preferably 5 parts by mass or more and 18 parts by mass or less, even more preferably 8 parts by mass or more and 15 parts by mass or less, and even more preferably 10 parts by mass or more and 15 parts by mass or less, based on 100 parts by mass of the component (B).

< 8 > The metal particle-containing composition according to any one of < 1 > to < 7 >, wherein the content of the component (A) is preferably 0.01 parts by mass or more, more preferably 0.05 parts by mass or more, and even more preferably 0.1 parts by mass or more, based on 100 parts by mass of the component (B).

< 9 > The metal particle-containing composition according to any one of < 1 > to < 8 >, wherein the content of the component (A) is preferably 10 parts by mass or less, more preferably 5 parts by mass or less, even more preferably 1 part by mass or less, even more preferably 0.5 parts by mass or less, and even more preferably 0.2 parts by mass or less, based on 100 parts by mass of the component (B).

< 10 > The metal particle-containing composition according to any one of < 1 > to < 7 >, wherein the content of the component (A) is preferably 0.01 parts by mass or more and 10 parts by mass or less, more preferably 0.05 parts by mass or more and 5 parts by mass or less, even more preferably 0.1 parts by mass or more and 1 part by mass or less, even more preferably 0.1 parts by mass or more and 0.5 parts by mass or less, and even more preferably 0.1 parts by mass or more and 0.2 parts by mass or less, based on 100 parts by mass of the component (B).

<11> The metal particle-containing composition according to any one of < 1 > to < 10 >, wherein the content of glucose unit contained in the component (A) is preferably 0.003 parts by mass or more, more preferably 0.005 parts by mass or more, even more preferably 0.01 parts by mass or more, and even more preferably 0.03 parts by mass or more, based on 100 parts by mass of the component (B).

< 12 > The metal particle-containing composition according to any one of < 1 > to < 11 >, wherein the content of glucose unit contained in the component (A) is preferably 5 parts by mass or less, more preferably 1 part by mass or less, even more preferably 0.5 parts by mass or less, even more preferably 0.2 parts by mass or less, and even more preferably 0.1 parts by mass or less, based on 100 parts by mass of the component (B).

< 13 > The metal particle-containing composition according to any one of < 1 > to < 10 >, wherein the content of glucose unit contained in the component (A) is preferably 0.003 parts by mass or more and 5 parts by mass or less, more preferably 0.005 parts by mass or more and 5 parts by mass or less, even more preferably 0.01 parts by mass or more and 1 part by mass or less, even more preferably 0.03 parts by mass or more and 0.5 parts by mass or less, even more preferably 0.03 parts by mass or more and 0.2 parts by mass or less, and even more preferably 0.03 parts by mass or more and 0.1 parts by mass or less, based on 100 parts by mass of the component (B).

< 14 > The metal particle-containing composition according to any one of < 1 > to < 13 >, wherein the content of the component (A) is preferably 0.01% by mass or more, more preferably 0.05% by mass or more, and even more preferably 0.1% by mass or more.

< 15 > The metal particle-containing composition according to any one of < 1 > to < 14 >, wherein the content of the component (A) is preferably 1.0% by mass or less, more preferably 0.6% by mass or less, even more preferably 0.4% by mass or less, even more preferably 0.3% by mass or less, and even more preferably 0.2% by mass or less.

< 16 > The metal particle-containing composition according to any one of < 1 > to < 13 >, wherein the content of the component (A) is preferably 0.01% by mass or more and 1.0% by mass or less, more preferably 0.05% by mass or more and 0.6% by mass or less, even more preferably 0.1% by mass or more and 0.4% by mass or less, even more preferably 0.1% by mass or more and 0.3% by mass or less, and even more preferably 0.1% by mass or more and 0.2% by mass or less.

< 17 > The metal particle-containing composition according to any one of < 1 > to < 16 >, wherein the content of glucose unit contained in the component (A) is preferably 1% by mass or more, more preferably 10% by mass or more, and even more preferably 30% by mass or more.

< 18 > The metal particle-containing composition according to any one of < 1 > to < 17 >, wherein the content of glucose unit contained in the component (A) is preferably 95% by mass or less, more preferably 80% by mass or less, even more preferably 70% by mass or less, even more preferably 60% by mass or less, even more preferably 50% by mass or less, and even more preferably 40% by mass or less.

< 19 > The metal particle-containing composition according to any one of < 1 > to < 18 >, wherein the content of the component (B) is preferably 80 parts by mass or more, more preferably 85 parts by mass or more, even more preferably 90 parts by mass or more, even more preferably 95 parts by mass or more, even more preferably 96 parts by mass or more, even more preferably 97 parts by mass or more, and even more preferably 98 parts by mass or more,

based on 100 parts by mass of solid ingredients in the metal particle-containing composition.
< 20 > The metal particle-containing composition according to any one of < 1 > to < 19 >, wherein the content of the component (B) is preferably 99.9 parts by mass or less, based on 100 parts by mass of solid ingredients in the metal particle-containing composition.
<21 > The metal particle-containing composition according to any one of < 1 > to < 20 >, wherein the content of the component (B) is preferably 50% by mass or more, more preferably 60% by mass or more, even more preferably 70% by mass or more, even more preferably 80% by mass or more, and even more preferably 85% by mass or more.
< 22 > The metal particle-containing composition according to any one of < 1 > to < 21 >, wherein the content of the component (B) is preferably 97% by mass or less, more preferably 95% by mass or less, even more preferably 93% by mass or less, and even more preferably 91% by mass or less.
< 23 > The metal particle-containing composition according to any one of < 1 > to < 22 >, wherein the content of the component (C) is preferably 4% by mass or more, more preferably 5% by mass or more, and even more preferably 6% by mass or more.
< 24 > The metal particle-containing composition according to any one of < 1 > to < 23 >, wherein the content of the component (C) is preferably 40% by mass or less, more preferably 30% by mass or less, even more preferably 20% by mass or less, even more preferably 15% by mass or less, and even more preferably 13% by mass or less.
< 25 > The metal particle-containing composition according to any one of < 1 > to < 24 >, wherein the covalent bond is an amide bond.
< 26 > The metal particle-containing composition according to any one of < 1 > to < 25 >, wherein the modifying group is one or more kinds selected from a group consisting of (a) a hydrocarbon group and (b) a polymer group.
< 27 > The metal particle-containing composition according to < 26 >, wherein the number of carbon atoms of the (a) hydrocarbon group is preferably 1 or more, more preferably 3 or more, even more preferably 8 or more, and even more preferably 10 or more.
< 28 > The metal particle-containing composition according to < 26 > or < 27 >, wherein the number of carbon atoms of the (a) hydrocarbon group is preferably 30 or less, more preferably 22 or less, and even more preferably 18 or less.
< 29 > The metal particle-containing composition according to < 26 >, wherein the (b) polymer group is preferably a functional group having a repeating structure which is connected by a structure having oxygen atoms, more preferably a functional group having a repeating structure which is connected by oxygen atoms, even more preferably having a polyoxyalkylene structure, and even more preferably alkoxy-polyoxyalkylene group.
< 30 > The metal particle-containing composition according to any one of < 1 > to < 29 >, wherein the modifying group is a modifying group having a structure represented by the following formula (1):

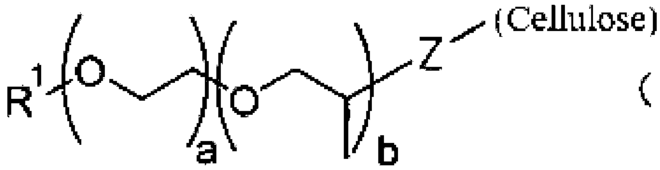

(1)

wherein Z represents a covalent bond, and $R^1$ represents a hydrogen atom or a hydrocarbon group having carbon atoms of 1 or more and 6 or less, a unit derived from ethylene oxide and a unit derived from propylene oxide are present randomly or in a state of a block, and a is a positive number showing the average number of moles of ethylene oxide added and b is a positive number showing the average number of moles of propylene oxide added.
< 31 > The metal particle-containing composition according to any one of < 1 > to < 30 >, wherein a metal constituting the component (B) preferably contains at least one kind selected from the group consisting of metals in groups 4 to 14 and periods 4 to 6, and more preferably contains one kind selected from the group consisting of transition metals in groups 4 to 11 and periods 4 to 6.
< 32 > The metal particle-containing composition according to < 31 >, wherein the total content of metals in groups 4 to 14 and periods 4 to 6 in the component (B) is preferably 80% by mass or more, more preferably 90% by mass or more, even more preferably 95% by mass or more, even more preferably 98% by mass or more, and even more preferably 99% by mass or more.
< 33 > The metal particle-containing composition according to < 31 >, wherein the total content of transition metals in groups 4 to 11 and periods 4 to 6 in the component (B) is preferably 80% by mass or more, more preferably 90% by mass or more, even more preferably 95% by mass or more, even more preferably 98% by mass or more, and even more preferably 99% by mass or more.
< 34 > The metal particle-containing composition according to any one of < 1 > to < 30 >, wherein a metal constituting the component (B) preferably contains at least one kind selected from the group consisting of copper, silver, nickel and tin, more preferably contains copper or silver, and even more preferably contains copper.

< 35 > The metal particle-containing composition according to < 34 >, wherein the total content of at least one kind selected from the group consisting of copper, silver, nickel and tin in the component (B) is preferably 80% by mass or more, more preferably 90% by mass or more, even more preferably 95% by mass or more, even more preferably 98% by mass or more, and even more preferably 99% by mass or more.
< 36 > The metal particle-containing composition according to < 34 >, wherein the content of copper or silver in the component (B) is preferably 80% by mass or more, more preferably 90% by mass or more, even more preferably 95% by mass or more, even more preferably 98% by mass or more, and even more preferably 99% by mass or more.
< 37 > The metal particle-containing composition according to any one of < 1 > to < 30 >, wherein a metal constituting the component (B) is preferably one or more kinds selected from the group consisting of metals in groups 4 to 14 and periods 4 to 6, and more preferably one or more kinds selected from the group consisting of transition metals in groups 4 to 11 and periods 4 to 6.
< 38 > The metal particle-containing composition according to any one of < 1 > to < 30 >, wherein a metal constituting the component (B) is preferably copper, silver, nickel or tin, more preferably copper or silver, and even more preferably copper.
< 39 > The metal particle-containing composition according to any one of < 1 > to < 38 >, wherein the component (C) is a hydrophobic solvent.
< 40 > The metal particle-containing composition according to < 39 >, wherein the dissolution amount of the hydrophobic solvent in 100 g of water (20°C under 1 atm) is preferably 100 g or less, more preferably 50 g or less, even more preferably 30 g or less, and even more preferably 10 g or less.
< 41 > The metal particle-containing composition according to any one of < 1 > to < 38 >, wherein the component (C) preferably includes at least one kind selected from (poly)alkylene glycol, (poly)alkylene glycol derivative, and terpene alcohol, more preferably includes at least one kind selected from the group consisting of diethylene glycol, dipropylene glycol, polyethylene glycol (number average molecular weight is preferably 180 or more and 1000 or less, more preferably 180 or more and 600 or less, and even more preferably 180 or more and 400 or less), α-terpineol, and diethylene glycol monobutyl ether, and even more preferably includes at least one kind selected from diethylene glycol, polyethylene glycol (number average molecular weight is 180 or more and 400 or less), α-terpineol and diethylene glycol monobutyl ether.
< 42 > The metal particle-containing composition according to < 41 >, wherein the total content of (poly)alkylene glycol, (poly)alkylene glycol derivative, terpene alcohol, glycerin, and glycerin derivative in the component (C) is preferably 50% by mass or more, more preferably 70% by mass or more, even more preferably 80% by mass or more, even more preferably 90% by mass or more, even more preferably 95% by mass or more, even more preferably 98% by mass or more, even more preferably 99% by mass or more, even more preferably 99.9% by mass or more, and even more preferably substantially 100% by mass.
< 43 > A metal particle-containing composition containing the following component (A), component (B), and component (C);

wherein the content of the component (B) is 70 parts by mass or more, preferably 80 parts by mass or more, more preferably 85 parts by mass or more, even more preferably 90 parts by mass or more, even more preferably 95 parts by mass or more, even more preferably 96 parts by mass or more, even more preferably 97 parts by mass or more, and even more preferably 98 parts by mass or more, and preferably 99.9 parts by mass or less, based on 100 parts by mass of solid ingredients in the metal particle-containing composition;
the content of the component (C) is preferably 1 part by mass or more and 20 parts by mass or less, more preferably 5 parts by mass or more and 18 parts by mass or less, even more preferably 8 parts by mass or more and 15 parts by mass or less, and even more preferably 10 parts by mass or more and 15 parts by mass or less, based on 100 parts by mass of the component (B);
the content of the component (A) is preferably 0.01 parts by mass or more and 10 parts by mass or less, more preferably 0.05 parts by mass or more and 5 parts by mass or less, even more preferably 0.1 parts by mass or more and 1 part by mass or less, even more preferably 0.1 parts by mass or more and 0.5 parts by mass or less, and even more preferably 0.1 parts by mass or more and 0.2 parts by mass or less, based on 100 parts by mass of the component (B); and
the content of the component (B) is preferably 50% by mass or more, more preferably 60% by mass or more, even more preferably 70% by mass or more, even more preferably 80% by mass or more, and even more preferably 85% by mass or more, and preferably 97% by mass or less, more preferably 95% by mass or less, even more preferably 93% by mass or less, and even more preferably 91% by mass or less;

(A) a modified cellulose fiber having a modifying group in an anionic group of an anion-modified cellulose fiber via a covalent bond,
(B) metal particles, and

(C) an organic compound which is liquid at 25°C under 1 atm.

< 44 > The metal particle-containing composition according to any one of < 1 > to < 43 >, wherein the composition is used for a paste for printing.
< 45 > The metal particle-containing composition according to any one of < 1 > to < 43 >, wherein the composition is used for ink.
< 46 > A method for producing a film including applying the metal particle-containing composition as defined in any one of < 1 > to < 43 > on a base material.
< 47 > A method for producing an electrically conductive member including applying the metal particle-containing composition as defined in any one of < 1 > to < 43 > on a substrate.

## EXAMPLES

Hereinafter, the present invention will be described in detail by showing Examples. However, the scope of the present invention is not limited to the following Examples. Here, "ambient pressure" represents 101.3 kPa, and "ambient temperature" represents 25°C.
Each physical property was measured or calculated according to the following methods.

[Average Fiber Diameter, Average Fiber Length and Average Aspect Ratio (Average Fiber Length / Average Fiber Diameter) of Anion-Modified Cellulose Fiber, Shortened Anion-Modified Cellulose Fiber and Modified Cellulose Fiber]

Depending on the sizes of cellulose fibers to be measured, either of the following two measurement methods was selected and the measurement was carried out.

(1) Measurement of modified cellulose fiber

Deionized water or N,N-dimethyl formamide (DMF) was added to the cellulose fiber to be measured, to prepare a dispersion, a content of which was 0.0001% by mass. The dispersion was added dropwise to mica (mica), and dried to provide an observation sample. A fiber height (a difference of height between portions with fiber and without fiber) of the cellulose fibers in the observation sample was measured with an atomic force microscope (AFM), Nanoscope II Tappingmode AFM, manufactured by Digital Instrument; a probe used being Point Probe (NCH) manufactured by NANOSENSORS. During the measurement, 100 strands of cellulose fibers were extracted from a microscopic image in which the cellulose fibers could be confirmed, and an average fiber diameter was calculated from the fiber heights of the fibers. An average fiber length was calculated from a distance in the direction of fibers. In addition, an average aspect ratio (average fiber length / average fiber diameter) was calculated from the average fiber diameter and the average fiber length calculated.

(2) Measurement of anion-modified cellulose fiber and shortened anion-modified cellulose fiber

Deionized water was added to cellulose fibers to be measured, to prepare a dispersion, a content of which was 0.01% by mass. The dispersion was measured with a wet-dispersion type image analysis particle distribution counter manufactured by JASCO International Co., Ltd., IF-3200, under the conditions of a front lens: 2 folds, telecentric zoom lens: 1 fold, image resolution: 0.835 μm/pixel, syringe inner diameter: 6,515 μm, spacer thickness: 500 μm, image recognition mode: ghost, threshold: 8, amount of analytical sample: 1 mL, and sampling: 15%. Moreover, when the cellulose fiber was approximated to a rectangular, the length of the short axis was considered as a fiber diameter and the length of the long axis was considered as a fiber length, and measurement of each value was carried out for 100 cellulose fibers to calculate the average. In addition, an average aspect ratio (average fiber length / average fiber diameter) was calculated from the average fiber diameter and the average fiber length calculated.
Incidentally, "average aspect ratio (average fiber length / average fiber diameter)" is also merely referred to as "aspect ratio."

[Content of Anionic Groups (Carboxyl groups) of Anion-Modified Cellulose Fiber, Shortened Anion-Modified Cellulose Fiber and Modified Cellulose Fiber]

Cellulose fibers to be measured with the mass of 0.5 g on a dry basis were placed in a beaker, and deionized water or a mixed solvent of methanol/deionized water = 2/1 (volume ratio) was added thereto to make up a total volume of 55 mL. Five milliliters of a 0.01 M aqueous sodium chloride solution was added thereto to provide a dispersion. The dispersion was stirred until the cellulose fibers to be measured were sufficiently dispersed. A 0.1 M hydrochloric acid was added to this

dispersion to adjust its pH to 2.5 to 3, and a 0.05 M aqueous sodium hydroxide solution was added dropwise to the dispersion with an automated titration instrument manufactured by DKK-TOA CORPORATION, AUT-710, under the conditions of a waiting time of 60 seconds. The values of electroconductivity and a pH were measured every minute. The measurements were continued up to a pH of 11 or so to obtain an electroconductivity curve. A titrated amount of sodium hydroxide solution was obtained from this electroconductivity curve, and the content of the anionic group of the cellulose fibers to be measured was calculated in accordance with the following formula:

Content of Anionic Group, mmol/g = [Titrated Amount of Aqueous Sodium Hydroxide Solution (mL) × Concentration of Aqueous Sodium Hydroxide Solution (0.05 M)]/[Mass of Cellulose Fibers to Be Measured (0.5 g)]

[Amount of Bound Modifying Groups and Degree of introduction of Modifying Groups of Modified Cellulose Fiber]

The amount of bound modifying groups in modified cellulose fibers was determined by an IR method. Specifically, the infrared absorption spectrum of dried modified cellulose fibers was measured using the ATR method with a Nicolet 6700 spectrophotometer (Thermo Fisher Scientific K.K.). Both the amount and degree of introduction of the modifying groups were calculated using formulas A and B.

This description applies to the case where the anionic group is a carboxyl group (i.e., carboxy-modified cellulose fibers). The term "peak intensity at 1720 $cm^{-1}$" refers to the peak due to the carbonyl group. For anions other than the carboxyl group, the corresponding wavenumber should be adjusted appropriately.

< Formula A >

$$\text{Amount of Bound Modifying Group } \mathbf{d}\text{, mmol/g} = \mathbf{a} \times (\mathbf{b} - \mathbf{c}) / \mathbf{b}$$

**a:** a carboxyl group content of carboxy-modified cellulose fiber (anion-modified cellulose fiber), mmol/g;
**b:** a peak intensity at 1720 $cm^{-1}$ of carboxy-modified cellulose fiber (anion-modified cellulose fiber); and
**c:** a peak intensity at 1720 $cm^{-1}$ of modified cellulose fiber.

< Formula B >

$$\text{Degree of introduction of Modifying Group } \mathbf{e}\text{, mol\%} = 100 \times \mathbf{d}/\mathbf{a}$$

[Crystallinity of Anion-Modified Cellulose Fiber, Shortened Anion-Modified Cellulose Fiber and Modified Cellulose Fiber]

The crystallinity of the anion-modified cellulose fiber, the shortened anion-modified cellulose fiber and the modified cellulose fiber were obtained by carrying out measurement using an X-ray diffractometer manufactured by Rigaku Corporation, MiniFlexII, under the following conditions.

Condition for preparation of measurement pellet: a smooth pellet having an area of 320 $mm^2$ × a thickness of 1 mm was prepared by applying pressure to the subject cellulose fiber in a range of from 10 to 20 MPa with a tablet molding machine.
X-ray diffraction analysis condition: step angle 0.01°, scanning speed: 10°/min, measurement range: diffraction angle $2\theta$ = 5° to 40°
X-ray source: Cu/K$\alpha$-radiation, tube voltage: 15 kV, tube current: 30 mA Peak Splitting Conditions: After the background noise was removed, a peak was fit with a Gaussian function so that a difference in errors between $2\theta$ = 13-23° falls within 5%.

The crystallinity of cellulose I crystal structure of the anion-modified cellulose fiber, the shortened anion-modified cellulose fiber and the modified cellulose fiber was calculated using areas of X-ray diffraction peaks obtained by the above peak splitting based on the following formula (A).

$$\text{Cellulose I Crystallinity, \%} = [\text{Icr} / (\text{Icr} + \text{Iam})] \times 100 \qquad \text{(A)}$$

wherein Icr is a diffraction peak area of a lattice face (002 face) (diffraction angle $2\theta$ = 22-23°), and Iam is a diffraction peak area of an amorphous portion (diffraction angle $2\theta$ = 18.5°), in X-ray diffraction.

[Solid content]

The solid content was obtained using a halogen moisture balance, manufactured by Shimadzu Corporation, MOC-120H by carrying out the measurement according to the following condition.

Measurements with a one-gram sample were taken in a thermostat held at 150°C every 30 seconds, and a value at which the reduction in mass was 0.1% or less of the initial amount of the sample was defined as solid ingredients amount. Here, in the case where it is difficult to analyze the solid content by the above analysis method due to the use of an organic solvent with high boiling point, known alternative methods such as phenol-sulfuric acid method may be used.

The percentage of value obtained by dividing the solid ingredient amount obtained in the above measurement by the mass of samples before heating was defined as solid content (% by mass).

[Concentration of Component (A) in Dispersion]

The concentration of component (A) in the dispersion was defined as the solid content in the dispersion (% by mass).

[Concentration of Component (A') in Dispersion]

The concentration of the modified cellulose fiber having a modifying group via an ion bond which was used in Comparative Examples mentioned below in the dispersion (hereinafter, described as component (A')) was calculated from the formulated amount of each component upon producing dispersion of the component (A'), provided that all of the anion-modified cellulose fibers and amines formulated were ionically bonded.

[Concentration of Glucose Unit Contained in Component (A) or Component (A') in Dispersion]

According to the following formula, concentration of glucose unit contained in component (A) or component (A') in the dispersion was calculated.

Concentration of Glucose Unit Contained in Component (A) or Component (A') in Dispersion (% by mass) = 1000 × Content of Component (A) or Component (A') in Dispersion (% by mass)/[1000 + Molecular Weight of Compound for Modification (g/mol) × Amount of Bound Modifying Groups (mmol/g)]

[Viscosity of Dispersion of Component (A) or Component (A')]

The viscosity of the dispersion of component (A) or component (A') was measured using a rheometer, PHYSICA MCR300, manufactured by Anton Paar GmbH. The corn-shaped jig, CP25-1 or CP50-1 was used as a measurement jig depending on the viscosity of the dispersion, and the measurement was carried out under the condition of share rate of from 0.001 to 1000 $s^{-1}$ at first time, from 1000 to 0.001 $s^{-1}$ at second time and from 0.001 to 1000 $s^{-1}$ at third time, to obtain the viscosity upon the share rate of 1.0 $s^{-1}$ at 25°C under 1 atm at the time of third measurement from the viewpoint of the stability of viscosity.

[Transmittance of Dispersion of Component (A) or Component (A')]

As to the light transmittance at wavelength 660 nm of the dispersion of the component (A) or component (A'), the transmittance was measured under the condition of 25°C for 1 minute using a double beam spectrometer, manufactured by Hitachi High-Tech Science Corporation, U-2910 and a quartz cell having 10 mm of light pass length. It is shown that the higher the transmittance is, the better dispersed the modified cellulose fiber is.

[Content of Component (A) or Component (A') in Metal Particle-Containing Composition]

The content of component (A) or component (A') in the metal particle-containing composition was calculated from the concentration of component (A) or component (A') in the dispersion and the formulated composition of the metal particle-containing composition.

[Content of Glucose Unit Contained in Component (A) or Component (A') in Metal Particle-Containing Composition]

The content of the glucose unit in the metal particle-containing composition was calculated from the concentration of glucose unit in the dispersion and the formulated composition of the metal particle-containing composition.

[Content of Each Component in Metal Particle-Containing Composition]

The content of each component in the metal particle-containing composition was calculated from the formulated amount of each component upon preparing the metal particle-containing composition.

•Preparation of anion-modified cellulose fiber

To a 2-L beaker made of polypropylene (PP) equipped with a mechanical stirrer and agitation blades, 10 g of bleached kraft pulp fiber from needle-leaf trees as a native cellulose fiber of a raw material and 990 g of deionized water are supplied, and the contents are stirred at 25°C and 100 rpm for 30 minutes. Then, 0.13 g of TEMPO, 1.3 g of sodium bromide, and 35.5 g of 10.5% by mass aqueous sodium hypochlorite solution are added in this order to 10 g of the pulp fibers. A pH stud titration is then carried out using an automated titration instrument, and an 0.5 M aqueous sodium hydroxide solution is added dropwise thereto to keep a pH at 10.5. The reaction is carried out at 25°C, at a stirring rate of 100 rpm for 120 minutes. Next, additional 0.01 M of hydrogen chloride is added thereto while stirring to adjust pH of the suspension to 2. Then, the solid ingredient is filtered and separated by suction filtration. Thereafter, the filtered solid ingredient is dispersed into deionized water, and the operation in which the solid ingredient is filtered and separated by suction filtration is repeated until the conductivity of the filtrate reaches 200 μS/cm or less. An anion-modified cellulose fiber which is a raw material of a shortened anion-modified cellulose fiber can be obtained by carrying out dehydration treatment to the resulting solid ingredient.

The physical property of the resulting anion-modified cellulose fiber is shown in Table 1.

[Table 1]

Table 1

| Anion-modified cellulose fiber | | |
|---|---|---|
| Average fiber diameter | μm | 40 |
| Average fiber length | μm | 2022 |
| Aspect ratio | - | 51 |
| Carboxyl group content | mmol/g | 1.7 |
| Crystallinity | % | 70 |

•Preparation of shortened anion-modified cellulose fiber

(1) Preparation of shortened anion-modified cellulose fiber 1

Deionized water was added to the anion-modified cellulose fiber, to prepare a mixture having solid ingredients content of 5.00% by mass. Then, the mixture was stirred at 80°C and ambient pressure for 29 hours, to provide a water suspension of a shortened anion-modified cellulose fiber 1 having solid ingredients content of 13.1% by mass.

The physical properties of the resulting shortened anion-modified cellulose fiber 1 are shown in Table 2.

(2) Preparation of shortened anion-modified cellulose fiber 2

To the above anion-modified cellulose fiber, 193 g of deionized water was added, and the mixture was stirred for 30 minutes under room temperature (25°C) with a mechanical stirrer, to prepare a dispersion having the solid content of 1% by mass. Subsequently, 24.5 g of 1 M hydrochloric acid, manufactured by FUJIFILM Wako Pure Chemical Corporation was supplied to this dispersion, the mixture was stirred under room temperature for 1 hour to carry out reaction. After termination of the reaction, the solid ingredient was filtered and separated by suction filtration. Thereafter, the filtered solid ingredient was dispersed into deionized water, and the operation in which the solid ingredient was filtered and separated by suction filtration was repeated until the conductivity of the filtrate reached 200 μS/cm or less, to remove hydrochloric acid and created salts.

Thereafter, to a vial bottle equipped with a magnetic stirrer and a stirring bar, the resulting anion-modified cellulose fibers with the mass of 1.8 g on an absolute dry basis were charged, and ion-exchanged water was added until the mass of the treated liquid was made up to 36 g. The treated liquid was reacted at 95°C for 12 hours, thereby providing a

water suspension of shortened anion-modified cellulose fiber 2. The resulting water suspension of the shortened anion-modified cellulose fiber 2 was centrifuged (manufactured by Hitachi Koki Holdings Co., Ltd., CR21G III, centrifugal acceleration: 10000 G, 1 minute), to provide a composition containing a shortened anion-modified cellulose fiber 2 having a solid content of 25.7% by mass.

The physical property of the resulting shortened anion-modified cellulose fiber 2 is shown in Table 2.

[Table 2]

Table 2

| Shortened anion-modified cellulose fiber | | | |
|---|---|---|---|
| Anion-modified cellulose fiber | - | 1 | 2 |
| Average fiber diameter | μm | 3.3 | 3.3 |
| Average fiber length | μm | 260 | 180 |
| Aspect ratio | - | 79 | 55 |
| Carboxyl group content | mmol/g | 1.7 | 1.6 |
| Crystallinity | % | 69 | 60 |

•Preparation of Dispersion of Component (A)

(1) Preparation of dispersion of modified cellulose fiber A-1

To a beaker equipped with a magnetic stirrer and a stirring bar, the water suspension of the shortened anion-modified cellulose fiber 1 obtained in the above was charged. Subsequently, 1.3 g of 4-methylmorpholine and 8.2 g of 4-(4,6-dimethoxy-1,3,5-triazin-2-yl)-4-methylmorpholinium chloride, manufactured by KOKUSAN CHEMICAL Co., Ltd. which was a condensing agent were charged, and the mixture was dissolved in 371 g of methyl ethyl ketone, manufactured by FUJIFILM Wako Pure Chemical Corporation. To the solution, 52.2 g of methoxypoly(oxyethylene/oxypropylene)-2-propylamine (manufactured by HUNTSMAN, JEFFAMINE M2070, PO/EO (molar ratio) = 10/31, molecular weight 2000, hereinafter, abbreviated as "EOPO amine") corresponding to 1 mol of amino group based on 1 mol of carboxyl group of the cellulose fiber was added, and the reaction liquid was reacted at 25°C for 14 hours. After termination of reaction, 25.0 g of 1 M hydrochloric acid, manufactured by FUJIFILM Wako Pure Chemical Corporation was added and stirred, and the mixture was suspended. The solid was filtered and separated from the resulting suspension by reduced pressure filtration. To the resulting solid, 350 g of ethanol was added and suspended, to filter and separate the solid ingredient by reduced pressure filtration. Then, 350 g of 1-methoxy-2-propanol (manufactured by Daicel Corporation, hereinafter, abbreviated as "PGME") was added to the solid and suspended, and the resulting suspension was separated into layers by centrifugation (manufactured by Hitachi Koki Holdings Co., Ltd., CR21G III, centrifugal acceleration: 10000 G, 1 minute), and the ethanol layer was removed, thereby providing a modified cellulose fiber PGME dispersion. The solid content of the resulting modified cellulose fiber PGME dispersion was 12.2% by mass.

Subsequently, to a beaker equipped with a magnetic stirrer and a stirring bar, 15.0 g of the modified cellulose fiber PGME dispersion (12.2% by mass of solid content), 43 g of deionized water, 53 g of PGME, and 60.0 g of polyethylene glycol 200 (manufactured by FUJIFILM Wako Pure Chemical Corporation, hereinafter, abbreviated as "PEG200") were added and stirred. After this solution was stirred at ambient temperature for 1 hour with a magnetic stirrer, the solution was subjected to five passes treatment with a high-pressure homogenizer NanoVater L-ES, manufactured by YOSHIDA KIKAI CO., LTD. at 150 MPa, to finely fibrillate the modified cellulose fiber. Solvent other than PEG200 was removed by subjecting the dispersion to the reduced pressure drying at 85°C, to provide a dispersion of a modified cellulose fiber A-1 having a methoxypoly(oxyethylene/oxypropylene)-2-propyl group via an amide bond.

(2) Preparation of dispersion of modified cellulose fiber A-2

To a beaker equipped with a magnetic stirrer and a stirring bar, 30.3 g of a composition containing the shortened anion-modified cellulose fiber 2 obtained in the above, and 3.8 g of 4-(4,6-dimethoxy-1,3,5-triazin-2-yl)-4-methylmorpholinium chloride, manufactured by KOKUSAN CHEMICAL Co., Ltd. which was a condensing agent were charged, and the mixture was dissolved in 144 g of methyl ethyl ketone, manufactured by FUJIFILM Wako Pure Chemical Corporation.

To the solution, 24.3 g of EOPO amine in an amount corresponding to 1 mol of amino group based on 1 mol of carboxyl group of the cellulose fiber was added, and the reaction liquid was reacted at 50°C for 6 hours. After termination of the reaction, 12.1 g of 1 M hydrochloric acid was added and stirred, and the solid was filtered and separated by a reduced pressure filtration. To the resulting solid, 180 g of ethanol was added, and suspended, to filter and separate the solid ingredient by a reduced pressure filtration. Then, 180 g of PGME was added to the solid and suspended, and the resulting suspension was separated into layers by centrifugation (manufactured by Hitachi Koki Holdings Co., Ltd., CR21G III, centrifugal acceleration: 10000 G, 1 minute), and the ethanol layer was removed, thereby providing a modified cellulose fiber PGME dispersion. The solid content of the resulting modified cellulose fiber PGME dispersion was 19.4% by mass.

Subsequently, to a beaker equipped with a magnetic stirrer and a stirring bar, 1.9 g of the modified cellulose fiber PGME dispersion (19.4% by mass of solid content), 57.9 g of deionized water, 39.7 g of PGME, and 15.0 g of PEG200 were added and stirred. After this solution was stirred at an ambient temperature for 1 hour with a magnetic stirrer, the solution was subjected to ten passes treatment with a high-pressure homogenizer NanoVater L-ES, manufactured by YOSHIDA KIKAI CO., LTD. at 150 MPa, to finely fibrillate the modified cellulose fiber. Solvent other than PEG200 was removed by subjecting the dispersion to the reduced pressure drying at 85°C, to provide a dispersion of a modified cellulose fiber A-2 having a methoxypoly(oxyethylene/oxypropylene)-2-propyl group via an amide bond.

(3) Preparation of dispersion of modified cellulose fiber A-3

A dispersion of a modified cellulose fiber A-3 having a methoxypoly(oxyethylene/oxypropylene)-2-propyl group via an amide bond was obtained by the same procedure as the preparation method of the dispersion of the modified cellulose fiber A-2, except that 5.9 g of the modified cellulose fiber PGME dispersion (19.4% by mass of solid content), 56.3 g of deionized water, 39.7 g of PGME, and 15.0 g of PEG200 were added to a beaker equipped with a magnetic stirrer and a stirring bar and the mixture was stirred.

(4) Preparation of dispersion of modified cellulose fiber A-4

To a beaker equipped with a magnetic stirrer and a stirring bar, 36.8 g of a composition containing the shortened anion-modified cellulose fiber 2 obtained in the above and 13.8 g of 4-(4,6-dimethoxy-1,3,5-triazin-2-yl)-4-methylmorpholinium chloride, manufactured by KOKUSAN CHEMICAL Co., Ltd. were charged, and the mixture was dissolved in 102 g of PGME. To the solution, 1.8 g of octylamine, manufactured by FUJIFILM Wako Pure Chemical Corporation, in an amount corresponding to 1 mol of amino group based on 1 mol of carboxyl group of the cellulose fiber was added, and the reaction liquid was reacted at 50°C for 6 hours. After termination of reaction, the solid was filtered and separated by a reduced pressure filtration. To the resulting solid, 190 g of ethanol was added, and suspended, to filter and separate the solid ingredient by a reduced pressure filtration. Then, 12.1 g of 1 M hydrochloric acid was added and stirred, 190 g of PGME was added to the solid and suspended, and the resulting suspension was separated into layers by centrifugation (manufactured by Hitachi Koki Holdings Co., Ltd., CR21G III, centrifugal acceleration: 10000 G, 1 minute), to remove the ethanol layer, thereby providing a modified cellulose fiber PGME dispersion. The solid content of the resulting modified cellulose fiber PGME dispersion was 13.0% by mass.

Subsequently, to a beaker equipped with a magnetic stirrer and a stirring bar, 10.5 g of the modified cellulose fiber PGME dispersion (13.0% by mass of solid content), 200.0 g of PGME, and 40.0 g of PEG200 were added and stirred. After this solution was stirred at an ambient temperature for 1 hour with a magnetic stirrer, the solution was subjected to ten passes treatment with a high-pressure homogenizer NanoVater L-ES, manufactured by YOSHIDA KIKAI CO., LTD. at 150 MPa, to finely fibrillate the modified cellulose fiber. Solvent other than PEG200 was removed by subjecting the dispersion to the reduced pressure drying at 85°C, to provide a dispersion of a modified cellulose fiber A-4 having an octyl group via an amide bond.

<u>•Preparation of Dispersion of Component (A')</u>

(1) Preparation of dispersion of modified cellulose fiber A'-1

To a beaker equipped with a magnetic stirrer and a stirring bar, 7.90 g of water suspension of the shortened anion-modified cellulose fiber 1 obtained in the above, 86.0 g of deionized water, 88.0 g of PGME, and 100 g of PEG200 were added and stirred. To the solution, 1.7 g of EOPO amine in an amount corresponding to 0.5 mol of amino group based on 1 mol of carboxyl group of the cellulose fiber was added, this solution was stirred at ambient temperature for 1 hour with a magnetic stirrer, and thereafter the solution was subjected to five passes treatment with a high-pressure homogenizer NanoVater L-ES, manufactured by YOSHIDA KIKAI CO., LTD. at 150 MPa, to finely fibrillate the modified cellulose fiber. Solvent other than PEG200 was removed by subjecting the dispersion to a reduced pressure drying at 85°C, to provide a dispersion of a modified cellulose fiber A'-1 having a methoxypoly(oxyethylene/oxypropylene)-2-propyl group via an ion

bond.

(2) Preparation of dispersion of modified cellulose fiber A'-2

A dispersion of a modified cellulose fiber A'-2 having a methoxypoly(oxyethylene/oxypropylene)-2-propyl group via an ion bond was obtained by the same procedure as that of Comparative Preparation Example 1, except that water suspension of the shortened anion-modified cellulose fiber 1 obtained in the above was changed to 34.0 g, deionized water was changed to 156 g, PGME was changed to 176 g and EOPO amine was changed to 7.70 g, respectively.

Each physical property, a structure and a composition of each dispersion of the modified cellulose fibers A-1 to A-4, as well as the modified cellulose fibers A'-1 and A'-2 are shown together in Table 3.

[Table 3]

Table 3

| | | | | A-1 | A-2 | A-3 | A-4 | A'-1 | A'-2 |
|---|---|---|---|---|---|---|---|---|---|
| Component (A) or component (A') | Modified cellulose fiber | | - | A-1 | A-2 | A-3 | A-4 | A'-1 | A'-2 |
| | Bond mediating introduction of modifying group | | - | Amide covalent bond | Amide covalent bond | Amide covalent bond | Amide covalent bond | Ion bond | Ion bond |
| | Modifying group | | - | EO/PO | EO/PO | EO/PO | Octyl group | EO/PO | EO/PO |
| | Amount of bound modifying groups | | mmol/g | 0.94 | 0.82 | 0.82 | 0.96 | 0.87 | 0.87 |
| | Degree of introduction of modifying group | | mol% | 54 | 51 | 51 | 60 | 50 | 50 |
| | Crystallinity | | % | 69 | 69 | 69 | 69 | 69 | 69 |
| | Average fiber diameter | | nm | 3 | 3 | 3 | 3 | 3 | 3 |
| | Average fiber length | | nm | 250 | 150 | 150 | 150 | 256 | 256 |
| | Aspect ratio | | - | 83 | 50 | 50 | 50 | 85 | 85 |
| Dispersion of component (A) or component (A') | Composition | Conc. of component (A) | % by mass | 3.0 | 2.4 | 7.1 | 3.3 | - | - |
| | | Conc. of component (A') | % by mass | - | - | - | - | 2.7 | 11 |
| | | Conc. of glucose unit | % by mass | 1.0 | 1.0 | 3.0 | 3.0 | 1.0 | 4.0 |
| | | PEG200 | % by mass | 97 | 98 | 93 | 97 | 97 | 89 |
| | Physical property | Transmittance | % | 93 | 78 | 50 | 4 | 95 | 81 |
| | | Viscosity | Pa・s | 113 | 0.3 | 4 | 0.3 | 0.6 | 112 |

*In the table, "EO/PO" means "methoxypoly(oxyethylene/oxypropylene)-2-propyl group."

Examples 1 to 7, Comparative Examples 1 to 3 and Reference Examples 1 to 4

(Preparation of metal particle-containing composition)

The dispersion of component (A) or component (A') was added to an agate mortar such that the content of the glucose unit was as given in Table 4 and that the formulated composition of component (B) and component (C) were as given in Table 4, the content was kneaded until the dry powder of component (B) was not visually observed, and the resulting mixed liquid was transferred to a polyethylene bottle. The tightly plugged polyethylene bottle was stirred for 5 minutes at 2000 $min^{-1}$ (2000 rotations/minute) using a revolution rotation mixer, Planetary Vacuum Mixer ARV-310, manufactured by THINKY CORPORATION, to provide each of metal particle-containing compositions of Examples 1 to 7, Comparative Examples 1 to 3 and Reference Examples 1 to 4.

Raw materials used in the production of metal particle-containing compositions are shown below.

< Component (B) >

- Copper particle B-1: manufactured by MITSUI MINING & SMELTING CO., LTD., spherical copper powder, form: 1050Y (specific surface area of 1.1 $m^2/g$ (catalog value), average particle size (D50) of 0.81 $\mu m$ (catalog value))
- Silver particle B-2: manufactured by MITSUI MINING & SMELTING CO., LTD., spherical highly filled silver powder, form: SL01 (specific surface area of 0.74 $m^2/g$ (catalog value), average particle size (D50) of 1.23 $\mu m$ (catalog value))
- Tin particle B-3: manufactured by FUJIFILM Wako Pure Chemical Corporation, powdery, granularity: portions passing through a sieve having 75 $\mu m$ opening of 95% or more (value in product specifications)
- Nickel particle B-4: manufactured by FUJIFILM Wako Pure Chemical Corporation, powdery, granularity: portions passing through a sieve having 150 $\mu m$ opening of 95% or more (value in product specifications)
  < Component (C) >
- PEG200: as mentioned above
- $\alpha$-Terpineol: manufactured by FUJIFILM Wako Pure Chemical Corporation, special grade reagent

The following evaluations were carried out using each metal particle-containing composition obtained according to Examples 1 to 7, Comparative Examples 1 to 3 and Reference Examples 1 to 4. The results are shown in Table 4.

< Evaluation >

[Evaluation of Viscosity of Metal Particle-Containing Composition]

The evaluation of viscosity of the metal particle-containing composition was carried out using a rheometer, PHYSICA MCR300, manufactured by Anton Paar GmbH. The PP25 parallel plate was used for the measurement, and the measurement was carried out under the measurement condition of share rate of from 0.001 to 1000 $s^{-1}$ at first time, from 1000 to 0.001 $s^{-1}$ at second time and from 0.001 to 1000 $s^{-1}$ at third time, to obtain the viscosity upon the share rate of 1.0 $s^{-1}$ at 25°C under 1 atm at the time of third measurement from the viewpoint of the stability of viscosity.

[Printing dimensional accuracy]

Printing dimensional accuracy of each metal particle-containing composition obtained in Examples, Comparative Examples and Reference Examples was evaluated according to the following procedure.

Firstly, a metal mask made of a stainless steel (thickness: 150 $\mu m$) having three lines of square openings of which size was 6 mm $\times$ 6 mm was put on a copper plate having a size of 30 mm $\times$ 30 mm (total thickness: 1 mm), and a metal particle-containing composition was applied on the copper plate by a stencil printing using a metal squeegee. Thereafter, a lateral width and a longitudinal width of an image of the metal particle-containing compositions transferred onto the copper plate were measured using a digital microscope, VHX-7000, manufactured by KEYENCE CORPORATION. Then, the printing dimensional accuracy (%) was calculated according to the following formula (I). The calculation of the printing dimensional accuracy was carried out for each of three images of the metal particle-containing composition transferred onto the copper plate, and an average of the values calculated from three images was considered as a printing dimensional accuracy of the metal particle-containing composition. Here, the lower the number is, the more excellent the printing dimensional accuracy is. The results are shown in Table 4.

$$\text{Printing dimensional accuracy (\%)} = [(\text{Longitudinal Width} + \text{Lateral Width})/(6\text{ mm} + 6\text{ mm}) - 1] \times 100 \quad (I)$$

[Table 4]

Table 4

| | | | | Examples | | | | | | | Comparative Examples | | | Reference Examples | | | |
|---|---|---|---|---|---|---|---|---|---|---|---|---|---|---|---|---|---|
| | | | | 1 | 2 | 3 | 4 | 5 | 6 | 7 | 1 | 2 | 3 | 1 | 2 | 3 | 4 |
| Formulated composition | Dispersion of component (A) or component (A') | | Kinds of modified cellulose fiber | A-1 | A-1 | A-2 | A-3 | A-4 | A-1 | A-1 | A'-1 | A'-2 | A'-1 | - | - | - | - |
| | | | Bond mediating introduction of modifying group of modified cellulose fiber | Amide covalent bond | Amide covalent bond | Amide covalent bond | Amide covalent bond | Amide covalent bond | Amide covalent bond | Amide covalent bond | Ion bond | Ion bond | Ion bond | - | - | - | - |
| | | | Formulated amount (part by mass) | 4.0 | 4.0 | 4.0 | 4.0 | 4.0 | 4.0 | 4.0 | 4.0 | 1.0 | 4.0 | - | - | - | - |
| | Component (B) | | Kinds of metal particles | Copper particle B-1 | Silver particle B-2 | Copper particle B-1 | Copper particle B-1 | Copper particle B-1 | Tin particle B-3 | Nickel particle B-4 | Copper particle B-1 | Copper particle B-1 | Silver particle B-2 | Copper particle B-1 | Silver particle B-2 | Tin particle B-3 | Nickel particle B-4 |
| | | | Formulated amount (part by mass) | 88.0 | 88.0 | 88.0 | 88.0 | 88.0 | 88.0 | 80.8 | 88.0 | 88.0 | 88.0 | 88.0 | 88.0 | 88.0 | 80.9 |
| | Component (C) | PEG200 | Formulated amount (part by mass) | 1.4 | 1.4 | 1.4 | 1.4 | 1.4 | 1.4 | 9.1 | 1.4 | 4.4 | 1.4 | 5.4 | 5.4 | 5.4 | 13.1 |
| | | α-Terpineol | Formulated amount (part by mass) | 6.6 | 6.6 | 6.6 | 6.6 | 6.6 | 6.6 | 6.1 | 6.6 | 6.6 | 6.6 | 6.6 | 6.6 | 6.6 | 6.1 |
| Content of component (A) in composition (% by mass) | | | | 0.12 | 0.12 | 0.10 | 0.28 | 0.13 | 0.12 | 0.12 | - | - | - | - | - | - | - |
| Content of component (A') in composition (% by mass) | | | | - | - | - | - | - | - | - | 0.11 | 0.11 | 0.1 1 | - | - | - | - |
| Content of glucose unit in composition (% by mass) | | | | 0.040 | 0.040 | 0.040 | 0.120 | 0.120 | 0.040 | 0.040 | 0.040 | 0.040 | 0.040 | - | - | - | - |
| Content of component (B) in composition (% by mass) | | | | 88.0 | 88.0 | 88.0 | 88.0 | 88.0 | 88.0 | 80.8 | 88.0 | 88.0 | 88.0 | 88.0 | 88.0 | 88.0 | 80.9 |
| Content of component (C) in composition (% by mass) | | | | 11.9 | 11.9 | 11.9 | 11.9 | 11.9 | 11.9 | 15.2 | 11.9 | 11.9 | 11.9 | 12.0 | 12.0 | 12.0 | 19.2 |
| Solid content in composition (% by mass) | | | | 88.1 | 88.1 | 88.1 | 88.3 | 88.1 | 88.1 | 80.9 | 88.1 | 88.1 | 88.1 | 88.0 | 88.0 | 88.0 | 80.9 |

(continued)

| | | Examples | | | | | | | Comparative Examples | | | Reference Examples | | | |
|---|---|---|---|---|---|---|---|---|---|---|---|---|---|---|---|
| | | 1 | 2 | 3 | 4 | 5 | 6 | 7 | 1 | 2 | 3 | 1 | 2 | 3 | 4 |
| Content of component (B) based on 100 parts by mass of solid ingredient (part by mass) | | 99.9 | 99.9 | 99.9 | 99.7 | 99.9 | 99.9 | 99.9 | 99.9 | 99.9 | 99.9 | 100.0 | 100.0 | 100.0 | 100.0 |
| Content of component (A) based on 100 parts by mass of component (B) (part bv mass) | | 0.13 | 0.13 | 0.11 | 0.32 | 0.15 | 0.14 | 0.15 | - | - | - | - | - | - | - |
| Content of component (A') based on 100 parts by mass of component (B) (part by mass) | | - | - | - | - | - | - | | 0.12 | 0.12 | 0.12 | - | - | - | - |
| Content of glucose unit based on 100 parts by mass of component (B) (part by mass) | | 0.045 | 0.045 | 0.045 | 0.136 | 0.136 | 0.045 | 0.050 | 0.045 | 0.045 | 0.045 | - | - | - | - |
| Content of component (C) based on 100 parts by mass of component (B) (part bv mass) | | 14 | 14 | 14 | 14 | 14 | 14 | 19 | 14 | 14 | 14 | 14 | 14 | 14 | 24 |
| Evaluation | Viscosity (Pa · s) | 157 | 135 | 113 | 131 | 143 | 130 | 43 | 79 | 79 | 64 | 40 | 37 | 0.7 | 7 |
| | Printing dimensional accuracy (%) | 4 | 5 | 7 | 4 | 7 | 4 | 14 | 8 | 8 | 9 | 11 | 12 | 35 | 40 |

The metal particle-containing compositions of Examples 1 to 7 had high viscosity and excellent printing dimensional accuracy as compared to the metal particle-containing compositions of Comparative Examples 1 to 3 and Reference Examples 1 to 4.

From the above, the metal particle-containing composition of the present invention has high viscosity, even if the content of the metal particle is high.

## Claims

1. A metal particle-containing composition comprising the following component (A), component (B), and component (C); wherein the content of the component (B) is 70 parts by mass or more, based on 100 parts by mass of solid ingredients in the metal particle-containing composition,

   (A) a modified cellulose fiber having a modifying group in an anionic group of an anion-modified cellulose fiber via a covalent bond,
   (B) metal particles, and
   (C) an organic compound which is liquid at 25°C under 1 atm.

2. The metal particle-containing composition according to claim 1, wherein the average particle size of the component (B) is 0.1 μm or more and 10 μm or less.

3. The metal particle-containing composition according to claim 1, wherein the granularity of the component (B) is 95% or more of the particles passing through a sieve having an opening of 300 μm.

4. The metal particle-containing composition according to any one of claims 1 to 3, wherein the content of the component (C) is 1 part by mass or more and 20 parts by mass or less, based on 100 parts by mass of the component (B).

5. The metal particle-containing composition according to any one of claims 1 to 4, wherein the content of the component (A) is 0.01 parts by mass or more and 10 parts by mass or less, based on 100 parts by mass of the component (B).

6. The metal particle-containing composition according to any one of claims 1 to 5, wherein the content of glucose unit comprised in the component (A) is 0.003 parts by mass or more and 5 parts by mass or less, based on 100 parts by mass of the component (B).

7. The metal particle-containing composition according to any one of claims 1 to 6, wherein the content of the component (B) is 50% by mass or more.

8. The metal particle-containing composition according to any one of claims 1 to 7, wherein the covalent bond is an amide bond.

9. The metal particle-containing composition according to any one of claims 1 to 8, wherein the modifying group is one or more kinds selected from a group consisting of (a) a hydrocarbon group and (b) a polymer group.

10. The metal particle-containing composition according to any one of claims 1 to 9, wherein the modifying group is a modifying group having a structure represented by the following formula (1):

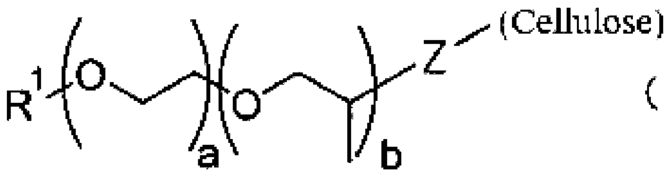

(1)

wherein Z represents a covalent bond, and $R^1$ represents a hydrogen atom or a hydrocarbon group having carbon atoms of 1 or more and 6 or less, a unit derived from ethylene oxide and a unit derived from propylene oxide are present randomly or in a state of a block, and a is a positive number showing the average number of moles of ethylene oxide added and b is a positive number showing the average number of moles of propylene oxide added.

**11.** The metal particle-containing composition according to any one of claims 1 to 10, wherein a metal constituting the component (B) comprises at least one kind selected from the group consisting of metals in groups 4 to 14 and periods 4 to 6.

**12.** The metal particle-containing composition according to any one of claims 1 to 11, wherein the metal constituting the component (B) is one or more kinds selected from the group consisting of transition metals in groups 4 to 11 and periods 4 to 6.

**13.** The metal particle-containing composition according to any one of claims 1 to 11, wherein the metal constituting the component (B) is copper, silver, nickel or tin.

**14.** The metal particle-containing composition according to any one of claims 1 to 13, wherein the component (C) is a hydrophobic solvent.

**15.** The metal particle-containing composition according to any one of claims 1 to 14, wherein the composition is used for a paste for printing.

**16.** The metal particle-containing composition according to any one of claims 1 to 14, wherein the composition is used for ink.

**17.** A method for producing a film comprising applying the metal particle-containing composition as defined in any one of claims 1 to 14 on a base material.

**18.** A method for producing an electrically conductive member comprising applying the metal particle-containing composition as defined in any one of claims 1 to 14 on a substrate.

## INTERNATIONAL SEARCH REPORT

International application No.
**PCT/JP2024/009227**

**A. CLASSIFICATION OF SUBJECT MATTER**

***C08L 1/08***(2006.01)i; ***C08K 3/08***(2006.01)i; ***C08K 5/00***(2006.01)i; ***C08K 7/18***(2006.01)i; ***C09D 5/24***(2006.01)i; ***C09D 7/61***(2018.01)i; ***C09D 7/63***(2018.01)i; ***C09D 7/65***(2018.01)i; ***C09D 11/00***(2014.01)i; ***C09D 11/037***(2014.01)i; ***C09D 101/02***(2006.01)i; ***C09D 201/00***(2006.01)i; ***H01B 13/00***(2006.01)i

FI: C08L1/08; C09D201/00; C09D7/61; C09D101/02; C09D7/65; C09D7/63; C09D11/00; C09D11/037; C09D5/24; C08K7/18; H01B13/00 503B; C08K3/08; C08K5/00

According to International Patent Classification (IPC) or to both national classification and IPC

**B. FIELDS SEARCHED**

Minimum documentation searched (classification system followed by classification symbols)

C08L1/08; C08K3/08; C08K5/00; C08K7/18; C09D5/24; C09D7/61; C09D7/63; C09D7/65; C09D11/00; C09D11/037; C09D101/02; C09D201/00; H01B13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/168446 A1 (MURATA MANUFACTURING CO., LTD.) 11 August 2022 (2022-08-11)<br>claims, paragraphs [0007], [0020], [0026], [0062], example 1 | 1-3, 5-6, 9, 11-18 |
| A | JP 2022-001634 A (KAO CORPORATION) 06 January 2022 (2022-01-06) | 1-18 |
| A | JP 2020-158764 A (KAO CORPORATION) 01 October 2020 (2020-10-01) | 1-18 |
| A | JP 2019-119881 A (KAO CORPORATION) 22 July 2019 (2019-07-22) | 1-18 |
| A | JP 2019-119880 A (KAO CORPORATION) 22 July 2019 (2019-07-22) | 1-18 |
| P, A | JP 2024-017244 A (KAO CORPORATION) 08 February 2024 (2024-02-08) | 1-18 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/009227**

| Patent document cited in search report | Publication date (day/month/year) | Patent family member(s) | Publication date (day/month/year) |
|---|---|---|---|
| WO 2022/168446 A1 | 11 August 2022 | CN 116745872 A | |
| | | KR 10-2023-0128323 A | |
| JP 2022-001634 A | 06 January 2022 | WO 2021/230191 A1 | |
| | | TW 202202569 A | |
| | | CN 115335445 A | |
| | | KR 10-2023-0009880 A | |
| JP 2020-158764 A | 01 October 2020 | (Family: none) | |
| JP 2019-119881 A | 22 July 2019 | (Family: none) | |
| JP 2019-119880 A | 22 July 2019 | (Family: none) | |
| JP 2024-017244 A | 08 February 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022001634 A
- JP 2015143336 A
- JP 2015143337 A